(19) Europäisches Patentamt / European Patent Office / Office européen des brevets

(11) **EP 2 863 365 A2**

(12) **EUROPEAN PATENT APPLICATION**

(43) Date of publication:
22.04.2015 Bulletin 2015/17

(51) Int Cl.:
*G06T 19/00* (2011.01)

(21) Application number: 14182461.5

(22) Date of filing: 27.08.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 09.10.2013 JP 2013212337

(71) Applicant: **FUJITSU LIMITED
Kawasaki-shi,
Kanagawa 211-8588 (JP)**

(72) Inventor: **Shimizu, Seiya
Kanagawa, 211-8588 (JP)**

(74) Representative: **Hoffmann Eitle
Patent- und Rechtsanwälte PartmbB
Arabellastraße 30
81925 München (DE)**

(54) **Image processing apparatus and method**

(57) An image processing apparatus that, based on an image imaged by a camera installed on a car and distance to a measurement point on a peripheral object computed by a range sensor installed on the car, draws virtual three-dimensional space in which a surrounding environment around the car is reconstructed. The image processing apparatus includes: an outline computation unit configured to compute an outline of an intersection plane between a plurality of grid planes defined in a predetermined coordinate system and the peripheral object; and an image processing unit configured to draw the outline computed by the outline computation unit on a corresponding peripheral object arranged in the virtual three-dimensional space; and the plurality of grid planes are configured with planes which are perpendicular to an X-axis, a Y-axis and a Z-axis in the predetermined coordinate system, respectively.

FIG. 1

**Description**

FIELD

The embodiments discussed herein are related to an image processing apparatus, an image processing method, and a program.

BACKGROUND

Various methods to create an entire peripheral image around a car by combining images imaged by a plurality of cameras installed on the car have been disclosed (for example, International Publication Pamphlet No. WO2012/017560).

In such processing, space close to the road surface may be displayed with small distortion. However, images of peripheral objects becomes distorted as their distance from the road surface becomes large, which leads to impairing a sense of distance. The reason of this phenomenon is that images of peripheral objects are displayed by projection on a stereoscopic projection plane which emulates a road plane (or road plane and background).

It is possible to solve this problem by measuring distance to peripheral objects by range sensors installed on a car, creating a projection plane, which emulates the shapes of the objects, at a correct position based on the measurement result, and projecting the images of the peripheral objects on the projection plane emulating the shapes of the objects.

However, because a boundary between a background and a peripheral object is detected by pixel value (color) of a projected object on an entire surroundings image, when brightness of the object is low or pixel values of peripheral objects positioned back and forth are almost identical, a problem such that it becomes difficult for a driver to recognize the shapes of peripheral objects or to grasp a sense of distance arises.

SUMMARY

In one aspect, an object of the present disclosure is to provide an image processing apparatus, an image processing method, and a program that make it possible to grasp the shapes of peripheral objects around the car easily.

According to an aspect of the invention, an apparatus includes an image processing apparatus that, based on an image imaged by a camera installed on a car and distance to a measurement point on a peripheral object computed by a range sensor installed on the car, draws virtual three-dimensional space in which a surrounding environment around the car is reconstructed. The image processing apparatus includes: an outline computation unit configured to compute an outline of an intersection plane between a plurality of grid planes defined in a predetermined coordinate system and the peripheral object; and an image processing unit configured to draw the outline computed by the outline computation unit on a corresponding peripheral object arranged in the virtual three-dimensional space; and the plurality of grid planes are configured with planes which are perpendicular to an X-axis, a Y-axis and a Z-axis in the predetermined coordinate system, respectively.

BRIEF DESCRIPTION OF DRAWINGS

FIG. 1 is a diagram illustrating a configuration example of an in-car system of a first embodiment;
FIGs. 2A and 2B are both diagrams for a description of a car coordinate system;
FIG. 3 is a diagram illustrating an installation example of cameras and range sensors;
FIG. 4 is a diagram for a description of a camera coordinate system;
FIGs. 5A to 5E are all diagrams for a description of installation parameters of cameras;
FIG. 6 is a diagram illustrating an example of a stereoscopic projection plane for visualization;
FIG. 7 is a diagram illustrating a relation between the car coordinate system and camera coordinate system on the stereoscopic projection plane;
FIGs. 8A and 8B are both diagrams for a description of a relation between an incident light vector in the camera coordinate system and a pixel position on a camera image;
FIG. 9 is a diagram illustrating an example of a result of visualization in which three-dimensional polygons constituting a stereoscopic projection plane are drawn with texture image drawn thereon;
FIG. 10 is a diagram for a description of a range sensor coordinate system;
FIG. 11 is a diagram for a description of a method to extract stereoscopic point group data of the first embodiment;
FIG. 12 is a diagram illustrating an example of an object projection plane which emulates a shape of a measured object constituted of three-dimensional polygons;

FIG. 13 is a diagram for a description of a condition to be registered as polygon data;

FIG. 14 is a diagram illustrating an example of grid planes (Y-axis and Z-axis) in the car coordinate system of the first embodiment;

FIG. 15 is a diagram for a description of a computation method of a line of intersection with a grid plane using a Z-axis grid plane as an example;

FIG. 16 is a diagram illustrating an example of a result of image processing of the first embodiment;

FIG. 17 is a functional block diagram illustrating a configuration example of an in-car apparatus of the first embodiment;

FIG. 18 is an example of a flowchart for a description of an image processing flow of the first embodiment;

FIG. 19 is a functional block diagram illustrating a configuration example of an in-car system of a second embodiment;

FIG. 20 is a portion of an example of a flowchart for a description of an image processing flow of the second embodiment;

FIG. 21 is a functional block diagram illustrating a configuration example of an in-car system of a third embodiment;

FIG. 22 is a portion of an example of a flowchart for a description of an image processing flow of the third embodiment; and

FIG. 23 is a diagram illustrating an example of a hardware configuration of the in-car system of the embodiments.

DESCRIPTION OF EMBODIMENTS

Embodiments of the present disclosure will be described in detail below with reference to the accompanying drawings.

(First embodiment)

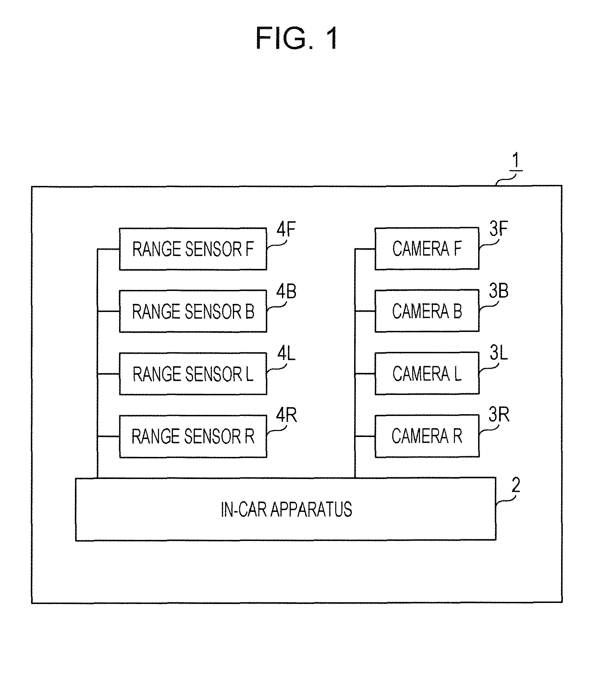

FIG. 1 is a diagram illustrating a configuration example of an in-car system 1 of a first embodiment. The in-car system 1 is, as illustrated in FIG. 1, configured with an in-car apparatus 2 which is an image processing apparatus, a plurality of cameras 3, and a plurality of range sensors 4. To the in-car apparatus 2, as illustrated in FIG. 1, the plurality of cameras 3 and the plurality of range sensors 4 are connected.

The camera 3 is configured with an imaging device such as a charge coupled device (CCD), complementary metal-oxide semiconductor (CMOS), metal-oxide semiconductor (MOS), and so on, images the surroundings of a car with a frequency of, for example, 30 fps (frame per second), and stores imaged images sequentially in an image buffer 11, which will be described later.

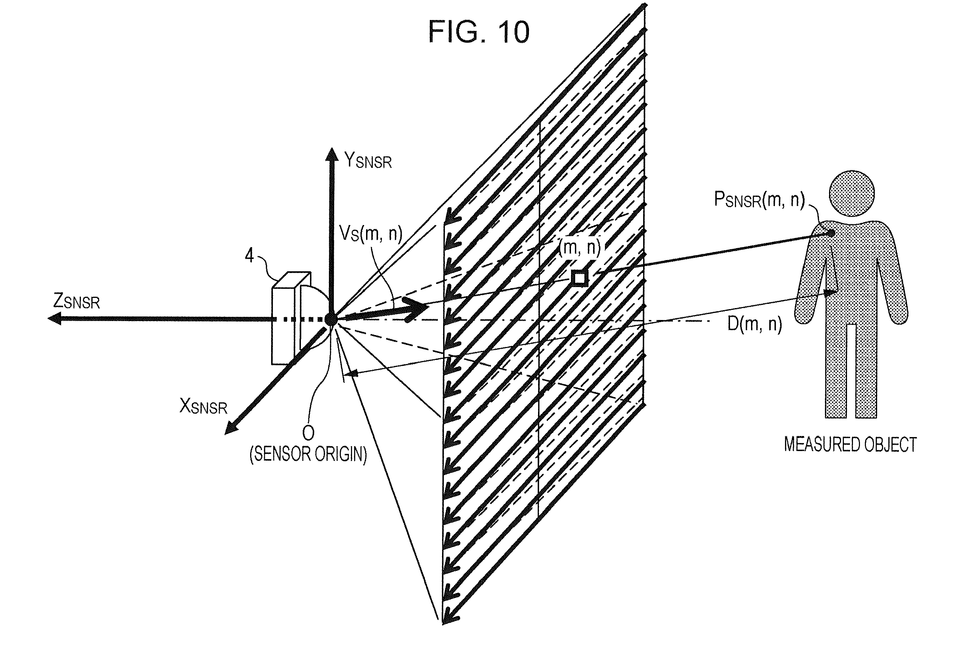

The range sensor 4 is, for example, a scanner-type laser range sensor, that is, laser radar which scans a three-dimensional space two-dimensionally. The range sensor 4 emits a laser beam intermittently and converts time of flight (TOF) of the laser beam, which is duration until reflected light from an measured object returns, to distance $D(m, n)$ (details will be described later with reference to FIG. 10). The range sensor 4 measures distance $D(m, n)$ to a measurement point on an object in the surroundings around the car with a frequency of, for example, 10 to 30 fps and transmits the measured distance $D(m, n)$ to the in-car apparatus 2. In the transmission, direction information indicating a scan direction is transmitted with the distance $D(m, n)$.

Details of the in-car apparatus 2 will be described later. An algorithm of the first embodiment will be described below along a flow.

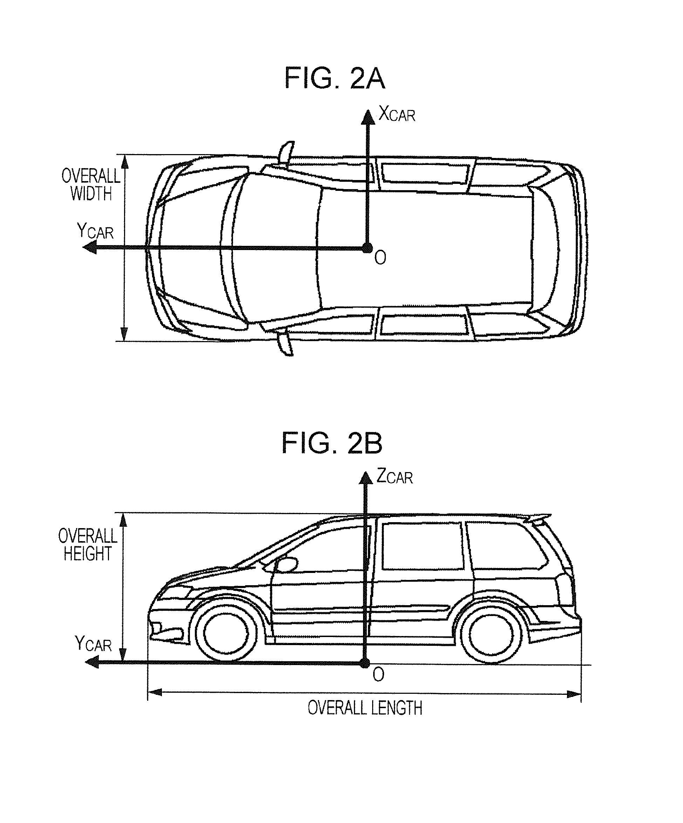

First, referring to FIGs. 2 to 5, a car coordinate system $C_{CAR}$ and a camera coordinate system $C_{CAM}$ will be described.

FIGs. 2A and 2B are both diagrams for a description of the car coordinate system $C_{CAR}$. The car coordinate system $C_{CAR}$ is a coordinate system specific to a car, on which the position of a peripheral object is specified by a coordinate by using the car as a reference. In the car coordinate system $C_{CAR}$, the positional coordinate of a peripheral object changes as the car moves. The car coordinate system $C_{CAR}$ may be configured in an arbitrary way. In the first embodiment, however, as illustrated in FIG. 2, a point on the road surface that coincides with the center of the car in plan view is set to the origin O, the front-back direction of the car is set to the Y-axis (the forward direction is defined as the positive direction), the left-right direction of the car is set to the X-axis (the right direction is defined as the positive direction), and the vertical direction of the car is set to the Z-axis (the upward direction is defined as the positive direction).

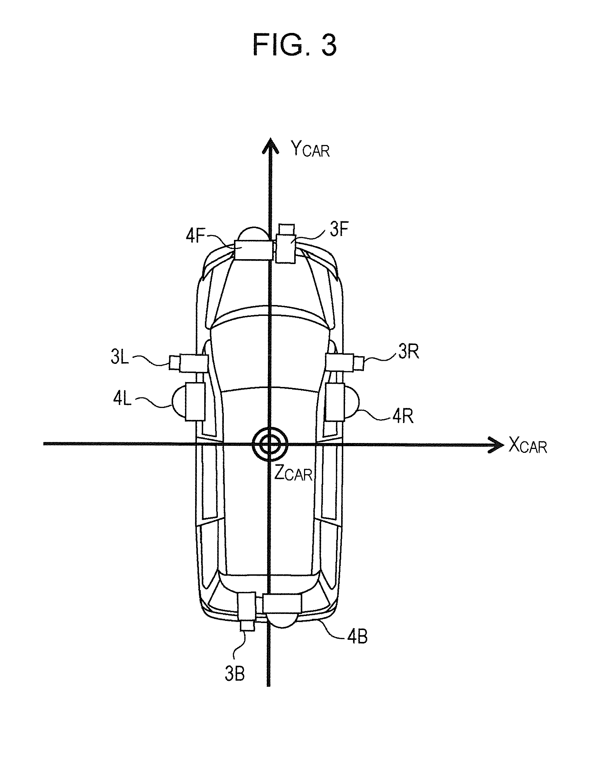

FIG. 3 is a diagram illustrating an installation example of the cameras 3 and range sensors 4 connected to the in-car apparatus 2. In the installation example illustrated in FIG. 3, a camera 3F which covers forward space in front of the car as an imaging range, a camera 3B which covers backward space behind the car as an imaging range, and a camera 3R which covers space in the right-hand side of the car as an imaging range and a camera 3L which covers space in the left-hand side of the car as an imaging range are installed on the front portion, on the rear portion, and in the vicinity of the right and left door mirrors, of the car, respectively. It is possible to image the entire surroundings around the car by these four cameras 3. Similarly, a range sensor 4F which covers forward space in front of the car as a scanning range, a range sensor 4B which covers backward space behind the car as a scanning range, and a range sensor 4R which covers space in the right-hand side of the car as a scanning range and a range sensor 4L which covers space in the left-hand side of the car as a scanning range are installed on the front portion, on the rear portion, and in the vicinity of the left and right door mirrors, of the car, respectively. These four range sensors 4 make it possible to scan the entire surroundings around the car.

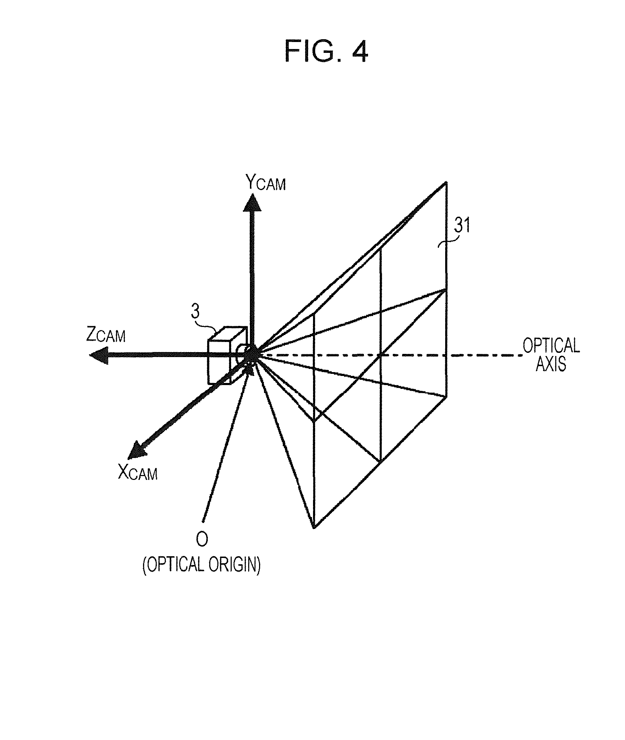

FIG. 4 is a diagram for a description of the camera coordinate system $C_{CAM}$. The camera coordinate system $C_{CAM}$ is a coordinate system specific to the camera 3, on which the position of a peripheral object, which is an imaging target, is specified by a coordinate by using the camera 3 as a reference. The camera coordinate system $C_{CAM}$ may be configured in an arbitrary way. In the first embodiment, however, as illustrated in FIG. 4, the optical origin of the camera 3 is set to the origin O, a horizontal direction orthogonal to the optical axis is set to the X-axis (the right direction with respect to the optical axis is defined as the positive direction), a vertical direction orthogonal to the optical axis is set to the Y-axis (the upward direction is defined as the positive direction), and the optical axis is set to the Z-axis (the opposite direction to the optical axis direction is defined as the positive direction). A view volume 31 indicates an imaging range of the camera 3.

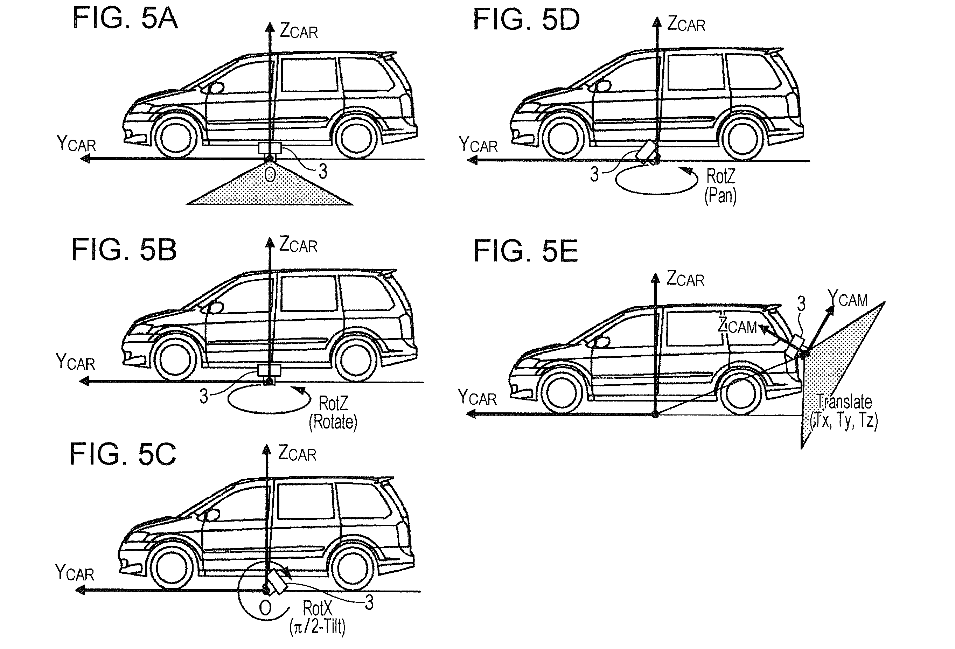

FIGs. 5A to 5E are all diagrams for a description of installation parameters of the camera 3. The installation parameters of the camera 3 include at least three-dimensional coordinates (Tx, Ty, Tz) and installation angles (Pan, Tilt, Rotate) which specify installation position of the camera 3 in the car coordinate system $C_{CAR}$. It is possible to define the installation position of the camera 3 uniquely based on the installation parameters.

The installation parameter Rotate indicates that, from an initial state of camera installation, which is defined, as illustrated in FIG. 5A, as a state in which the car coordinate system $C_{CAR}$ coincides with the camera coordinate system $C_{CAM}$, the camera 3 is, as illustrated in FIG. 5B, rotated by the angle Rotate around the optical axis (Z-axis) (RotZ(Rotate)). The installation parameter Tilt indicates that, as illustrated in FIG. 5C, the camera 3 is rotated by an angle ($\pi$/2-Tilt) around the X-axis (Rot-X($\pi$/2-Tilt)), In other words, with this conversion, an angle of depression (Tilt), which is defined as 0 at the horizontal direction and a positive number at a looking-down direction, is converted to an angle of elevation from the downward vertical direction.

The installation parameter Pan indicates that, as illustrated in FIG. 5D, the camera 3 is rotated by the angle Pan to the left or right around the Z-axis (RotZ(Pan)). The three-dimensional coordinate (Tx, Ty, Tz), which is an installation parameter, indicates that, as illustrated in FIG. 5E, by translating the camera 3 to the position of the three-dimensional coordinate (Tx, Ty, Tz) (Translate(Tx, Ty, Tz)) after adjusting the installation angle of the camera 3 by the installation angle (Pan, Tilt, Rotate), a targeted installation state of the camera 3 is achieved.

The installation parameters uniquely define the installation positions of the camera 3, and define a coordinate transformation between the car coordinate system $C_{CAR}$ and camera coordinate system $C_{CAM}$ as well. From the relations illustrated in FIGs. 5A to 5E, a coordinate transformation matrix $M_{CAR \rightarrow CAM}$ from the car coordinate system $C_{CAR}$ to the camera coordinate system $C_{CAM}$ may be expressed by the following equation (1).

$$M_{CAR \rightarrow CAM} = \begin{bmatrix} M_{11} & M_{12} & M_{13} & -M_{11}Tx - M_{12}Ty - M_{13}Tz \\ M_{21} & M_{22} & M_{23} & -M_{21}Tx - M_{22}Ty - M_{23}Tz \\ M_{31} & M_{32} & M_{33} & -M_{31}Tx - M_{32}Ty - M_{33}Tz \\ 0 & 0 & 0 & 1 \end{bmatrix} \quad \cdots \cdots (1)$$

In the above equation, when cp=cos(Pan), sp=sin(Pan), ct=cos(Tilt), st=sin(Tilt), cr=cos(Rotate), and sr=sin(Rotate), the following equations are satisfied:

$$M_{11} = cr \times cp - sr \times st \times sp;$$

$$M_{12} = cr \times sp + sr \times st \times cp;$$

$$M_{13} = sr \times ct;$$

$$M_{21} = -sr \times cp - cr \times st \times sp;$$

$$M_{22} = -sr \times sp + cr \times st \times cp;$$

$$M_{23} = cr \times ct;$$

$$M_{31} = ct \times sp;$$

$$M_{32} = -ct \times cp;$$

and

$$M_{33} = st.$$

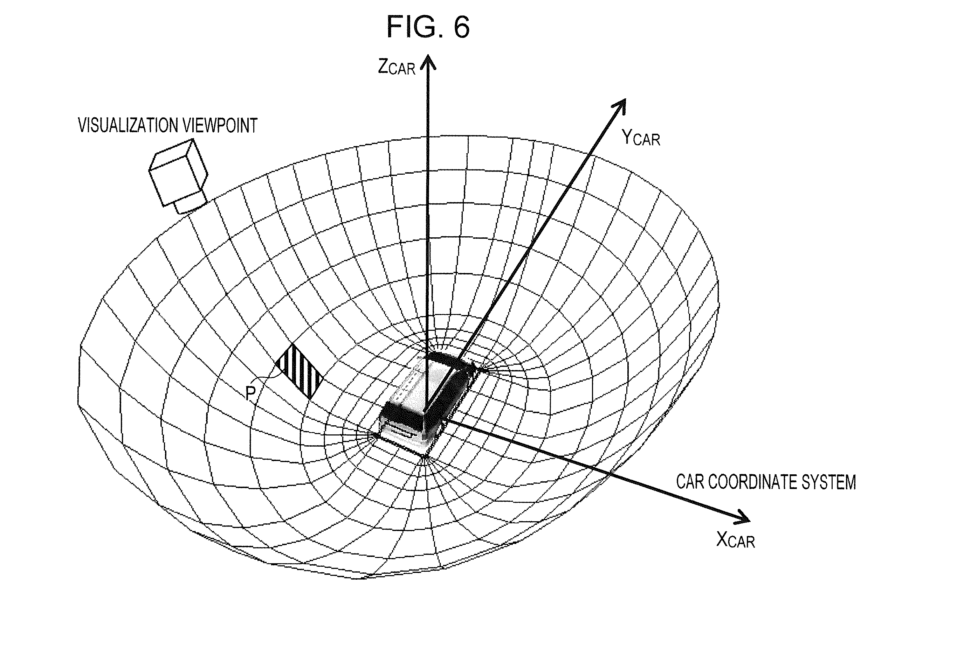

Next, referring to FIGs. 6 to 9, a method to visualize circumstances in the entire surroundings around the car based on images imaged by the cameras 3 will be described.

FIG. 6 is a diagram illustrating an example of a stereoscopic projection plane for visualization. To visualize circumstances in the entire surroundings around the car, a virtual stereoscopic projection plane, which emulates a road surface around the car, objects in the surroundings, or the like, as illustrated in FIG. 6, is set based on images imaged by the cameras 3. The stereoscopic projection plane of the first embodiment is, as illustrated in FIG. 6, constituted of minute planes, which are three-dimensional polygons P (also termed a projection plane polygon).

Projecting images imaged by the cameras 3 on the set stereoscopic projection plane and drawing the images from any visualization viewpoint visualize the circumstances in the entire surroundings around the car.

Projection of a camera image on the stereoscopic projection plane is equivalent to, for each apex of a three-dimensional polygon P (hereinafter termed polygon apex) constituting the stereoscopic projection plane, defining a corresponding pixel position on the camera image as a texture coordinate Q.

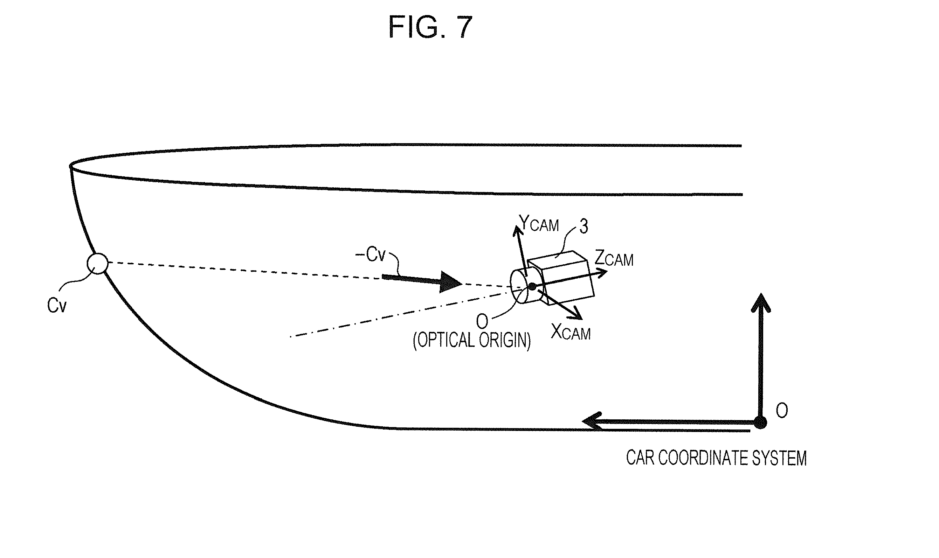

FIG. 7 is a diagram illustrating a relation between the car coordinate system $C_{CAR}$ and camera coordinate system $C_{CAM}$ on the stereoscopic projection plane. $C_V$ in FIG. 7 denotes a coordinate of a polygon apex in the car coordinate system $C_{CAR}$. The polygon apex coordinate $C_V$ in the car coordinate system $C_{CAR}$ may be transformed to a polygon apex coordinate $C_C$ in the camera coordinate system $C_{CAM}$ by using the above-described equation (1).

$$C_C = M_{CAR \to CAM} \times C_V. \quad . \quad . \quad . \quad . \quad (2)$$

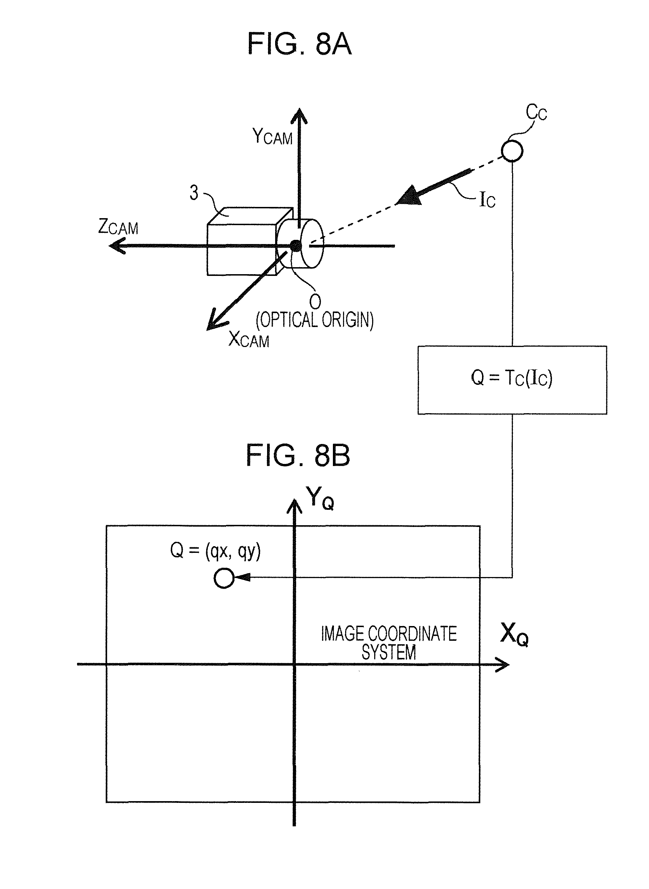

FIGs. 8A and 8B are both diagrams for a description of a relation between an incident light vector $I_C$ in the camera coordinate system $C_{CAM}$ and a pixel position on a camera image. $I_C$ in FIG. 8A denotes an incident light vector from the polygon apex coordinate $C_C$ in the camera coordinate system $C_{CAM}$ to the optical origin of the camera 3. Because the optical origin in the camera coordinate system $C_{CAM}$ coincides with the origin O, the incident light vector $I_C$ may be expressed by the equation (3).

$$I_C = -C_C. \quad . \quad . \quad . \quad . \quad (3)$$

Accordingly, the coordinate (texture coordinate) Q of a pixel position on the camera image corresponding to a polygon apex may be expressed by the equation (4) by using the incident light vector $I_C$.

$$Q = T_C(I_C). \; . \; . \; . \; . \; (4)$$

$T_C$ in the equation (4) denotes a mapping table that defines a one-to-one correspondence between an incident light vector $I_C$ corresponding to each polygon apex and a pixel position on the camera image. The mapping table $T_C$ may be pre-defined based on data on lens distortion and camera parameters.

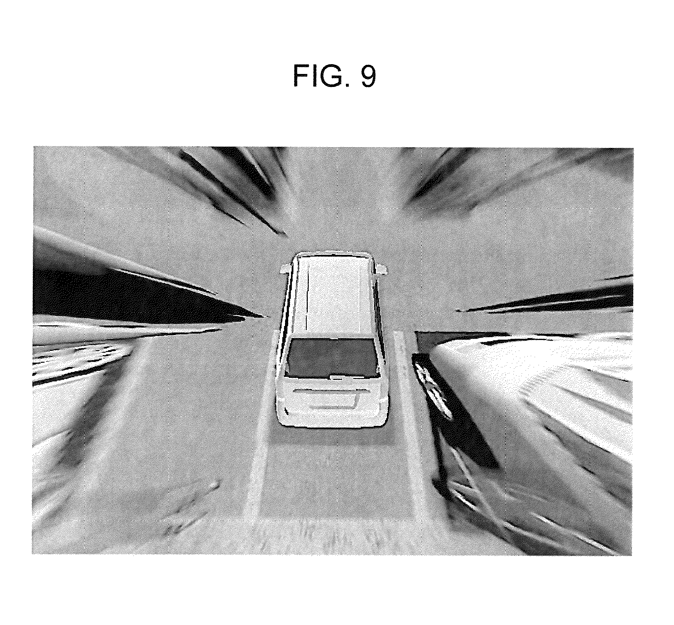

As described above, after, for polygon apexes of all three-dimensional polygons P constituting the stereoscopic projection plane, the coordinates (texture coordinates) Q of corresponding pixel positions are computed, camera images are visualized as texture images. This visualization, as illustrated in FIG. 9, may be implemented by, for example, three-dimensional computer graphics (CG) processing. FIG. 9 is a diagram illustrating an example of a result of visualization by drawing three-dimensional polygons P constituting the stereoscopic projection plane with texture images drawn thereon.

Next, referring to FIG. 10, a range sensor coordinate system $C_{SNSR}$ will be described. FIG. 10 is a diagram for a description of the range sensor coordinate system $C_{SNSR}$.

The range sensor coordinate system $C_{SNSR}$ is a coordinate system specific to the range sensor 4 on which the position of a peripheral object to be scanned is specified by a coordinate by using the range sensor 4 as a reference. The range sensor coordinate system $C_{SNSR}$ may be configured in an arbitrary way. In the first embodiment, however, as illustrated in FIG. 10, the sensor origin of the range sensor 4 is set to the origin O, the front-back direction of the range sensor 4 is set to the Z-axis (the backward direction is defined as the positive direction), a horizontal direction orthogonal to the Z-axis is set to the X-axis (the right direction with respect to the forward direction of the range sensor 4 is defined as the positive direction), and a vertical direction orthogonal to the Z-axis is set to the Y-axis (the upward direction is defined as the positive direction).

Arrows in FIG. 10 indicate a scanning sequence. In the example in FIG. 10, a case in which, for the horizontal direction, scanning is carried out M times sequentially from the left side to the right side viewed from the sensor origin, and, for the vertical direction, the scanning angle is changed N times sequentially from the upper end to the lower end of the scanning range is illustrated. In other words, in the example in FIG. 10, the range sensor 4 carries out MxN distance measurements for the scanning range.

It is assumed that a unit vector which specifies a scanning direction (radiation direction of a laser beam) in a (m, n)-th distance measurement is denoted by a scan vector $V_S(m, n)$. In this case, by using a scan vector $V_S(m, n)$ and distance D(m, n) to a measurement point on an object in the direction specified by the scan vector $V_S(m, n)$, the coordinate of the measurement point (hereinafter termed measurement point coordinate) $P_{SNSR}(m, n)$ in the range sensor coordinate system $C_{SNSR}$ may be expressed by the equation (5). The MxN scan vectors $V_S(m, n)$, each of which corresponds to a scanning direction, may be pre-defined as a table specific to a range sensor 4 (hereinafter termed scan vector table $T_S$).

$$P_{SNSR}(m, n) = V_S(m, n) \times D(m, n). \; . \; . \; . \; . \; (5)$$

When, similarly to the camera 3, installation parameters of a range sensor 4 are a three-dimensional coordinate (Tx, Ty, Tz) and installation angle (Pan, Tilt, Rotate) which specify the installation position of the range sensor 4 in the car coordinate system $C_{CAR}$, a coordinate transformation matrix $M_{CAR \to SNSR}$ from the car coordinate system $C_{CAR}$ to the range sensor coordinate system $C_{SNSR}$ may be expressed by the equation (6).

$$M_{CAR \to SNSR} = \begin{bmatrix} M_{11} & M_{12} & M_{13} & -M_{11}Tx - M_{12}Ty - M_{13}Tz \\ M_{21} & M_{22} & M_{23} & -M_{21}Tx - M_{22}Ty - M_{23}Tz \\ M_{31} & M_{32} & M_{33} & -M_{31}Tx - M_{32}Ty - M_{33}Tz \\ 0 & 0 & 0 & 1 \end{bmatrix} \quad \cdots (6)$$

Accordingly, a measurement point coordinate $P_{SNSR}(m, n)$ in the range sensor coordinate system $C_{SNSR}$ may be transformed to a measurement point coordinate $P_{CAR}(m, n)$ in the car coordinate system $C_{CAR}$ by the equation (7).

$$P_{CAR}(m, n) = M^{-1}_{CAR \to SNSR} \times P_{SNSR}(m, n). \ldots (7)$$

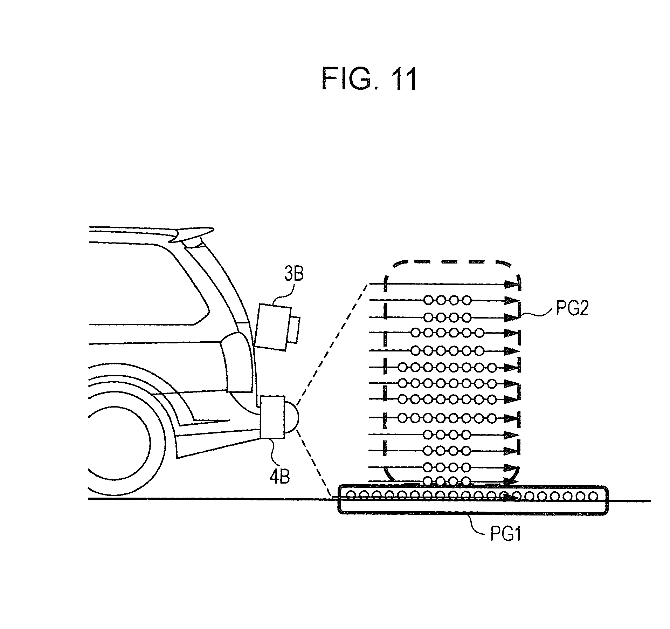

Next, measurement point coordinates $P_{CAR}(m, n)$ transformed to coordinates in the car coordinate system $C_{CAR}$ in the way described above are, as exemplified in FIG. 11, divided into a group of coordinates PG1 which includes coordinates corresponding to measurement points on the road surface (hereinafter termed road surface point group data), and a group of coordinates PG2 which includes coordinates corresponding to measurement points other than the measurement points on the road surface (hereinafter termed stereoscopic point group data), and measurement point coordinates $P_{CAR}(m, n)$ which belong to the road surface point group data PG1 are excluded. With this configuration, it becomes possible to reduce amount of processing target data and increase processing speed. FIG. 11 is a diagram for a description of a method for extracting stereoscopic point group data PG2 of the first embodiment.

Classification of measurement points into the road surface point group data PG1 and the stereoscopic point group data PG2 may be accomplished by, for example, classifying a measurement point coordinate $P_{CAR}(m, n)$ the absolute value of the Z-coordinate value of which is less than or equal to a preset threshold value (for example, 5 cm) as a member of the road surface point group data PG1 because the origin O in the car coordinate system $C_{CAR}$ is a point on the road surface.

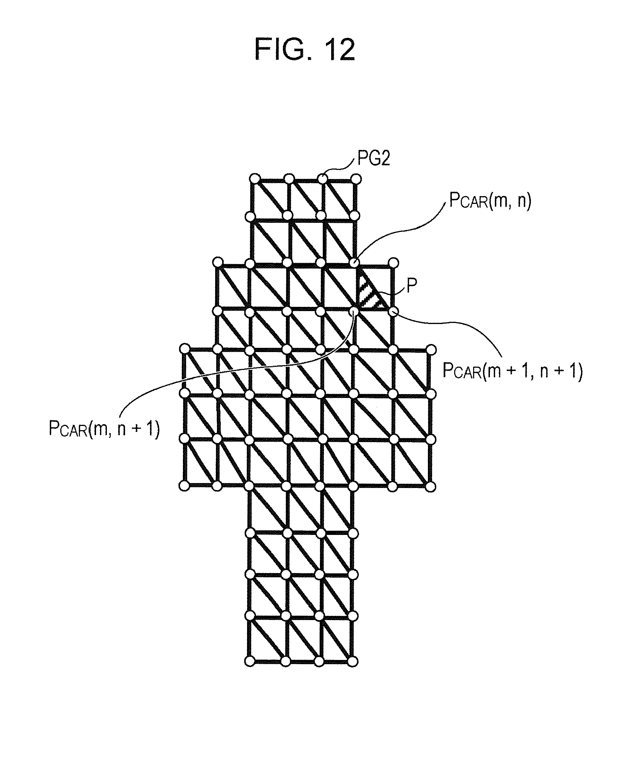

Next, a projection plane (hereinafter termed object projection plane) which emulates the shape of a measured object is generated based on measurement point coordinates $P_{CAR}(m, n)$ that belong to the stereoscopic point group data PG2. The object projection plane of the first embodiment is, as exemplified in FIG. 12, constituted of three-dimensional polygons P. FIG. 12 is a diagram illustrating an example of the object projection plane which is constituted of three-dimensional polygons P and emulates the shape of a measured object.

When the range sensor 4 scans measurement points in a sequence exemplified in FIG. 10, the coordinates of measurement points adjacent to the measurement point specified by a measurement point coordinate $P_{CAR}(m, n)$ are $P_{CAR}(m-1, n-1)$, $P_{CAR}(m, n-1)$, $P_{CAR}(m+1, n-1)$, $P_{CAR}(m-1, n)$, $P_{CAR}(m+1, n)$, $P_{CAR}(m-1, n+1)$, $P_{CAR}(m, n+1)$, and $P_{CAR}(m+1, n+1)$.

In order for a triangle the coordinates of the apexes of which are $P_{CAR}(m, n)$, $P_{CAR}(m, n+1)$, and $P_{CAR}(m+1, n+1)$ to be a three-dimensional polygon P constituting the object projection plane, all three points specified by $P_{CAR}(m, n)$, $P_{CAR}(m, n+1)$, $P_{CAR}(m+1, n+1)$ have to be on an identical measured object. This is because, when three points do not exist on an identical measured object, that is, for example, referring to FIG. 11, two points out of the three points are points on a pedestrian and the other point is a point on a wall (not illustrated) which exists behind the pedestrian, having a triangle which has such three points as the apexes as a three-dimensional polygon P causes a projection plane of the object that does not exist intrinsically to be generated between the pedestrian and the wall.

Hence, processing to avoid such an inconvenience is carried out.

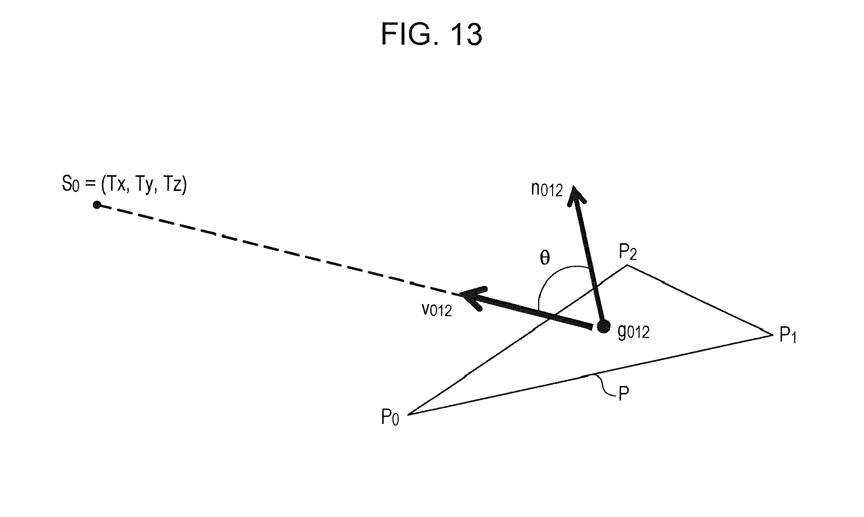

FIG. 13 is a diagram for a description of a condition on which a triangle is registered as polygon data PD. When each apex of a triangle is, as illustrated in FIG. 13, redefined by $P_0$, $P_1$, and $P_2$, respectively, for descriptive purpose, the coordinate of the center of gravity $g_{012}$ of the triangle may be expressed by the equation (8.1).

$$g_{012} = \frac{P_0 + P_1 + P_2}{3} \quad \cdots (8.1)$$

In addition, a unit normal vector $n_{012}$ having the coordinate of the center of gravity $g_{012}$ of the triangle as its origin may be expressed by the equation (8.2).

$$n_{012} = \frac{(P_1 - P_0) \times (P_2 - P_0)}{|(P_1 - P_0) \times (P_2 - P_0)|} \quad \cdots (8.2)$$

Furthermore, when the coordinate of the sensor origin of a range sensor 4, by which each apex of the triangle is measured, in the car coordinate system $C_{CAR}$ is denoted by $S_0 = (Tx, Ty, Tz)$, a unit directional vector $v_{012}$ to the coordinate of the sensor origin $S_0$, which has the coordinate of the center of gravity $g_{012}$ of the triangle as its origin, may be expressed by the equation (8.3).

$$v_{012} = \frac{g_{012} - S_0}{|g_{012} - S_0|} \qquad \cdots\cdots(8.3)$$

In this case, when a triangle having $P_0$, $P_1$, and $P_2$ as the apexes (hereinafter denoted as triangle $\{P_0, P_1, P_2\}$) satisfies the equation (8.4), the triangle $\{P_0, P_1, P_2\}$ is considered as a three-dimensional polygon P constituting the object projection plane and registered in the polygon data PD.

$$v_{012} \cdot n_{012} \geq \cos(\text{threshold angle}). \ldots . (8.4)$$

In the above equation, "$\cdot$" denotes an inner product of vectors. In other words, referring to FIG. 13, when an angle which the unit normal vector $n_{012}$ and unit directional vector $v_{012}$ form is denoted by $\theta$, satisfaction of the equation (8.4) means that $\theta$ is less than or equal to the threshold angle.

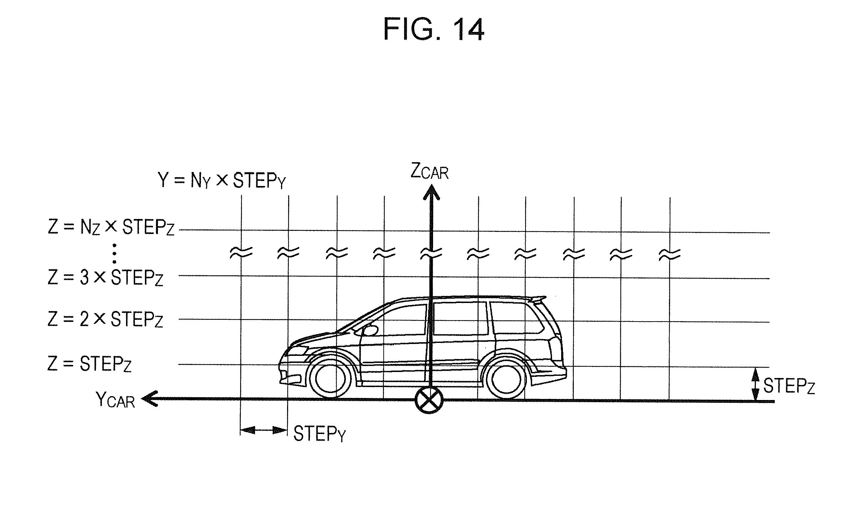

Next, for a three-dimensional polygon P registered in the polygon data PD as described above, lines of intersection (also termed grid lines) with {X-axis, Y-axis, Z-axis} grid planes are computed. In the above description, {X-axis, Y-axis, Z-axis} grid planes collectively denote X-axis grid planes, Y-axis grid planes, and Z-axis grid planes, which are mutually independent, for descriptive purposes. The X-axis grid planes, Y-axis grid planes, and Z-axis grid planes are, as illustrated in FIG. 14, a plurality of planes orthogonal to the X-axis, Y-axis, and Z-axis in the car coordinate system $C_{CAR}$, respectively. Each plane defining the X-axis grid planes is arranged with a uniform interspace $STEP_X$, each plane defining the Y-axis grid planes is arranged with a uniform interspace $STEP_Y$, and each plane defining the Z-axis grid plane is arranged with a uniform interspace $STEP_Z$. FIG. 14 is a diagram illustrating an example of grid planes (Y-axis and Z-axis) in the car coordinate system $C_{CAR}$ of the first embodiment.

When the {X-axis, Y-axis, Z-axis} grid planes are defined as described above and a triangle $\{P_0, P_1, P_2\}$ is registered in the polygon data PD as a three-dimensional polygon P, a line of intersection between the triangle $\{P_0, P_1, P_2\}$, which is a three-dimensional polygon P, and the {X-axis, Y-axis, Z-axis} grid planes may be computed by the following process (steps 1-1 to 1-3).

<Step 1-1>

The apexes $P_0$, $P_1$, and $P_2$ of the triangle $\{P_0, P_1, P_2\}$ are sorted in descending order of {X, Y, Z} coordinate value, and the result of sorting is denoted by $P_{A\{X, Y, Z\}}$, $P_{B\{X, Y, Z\}}$, and $P_{C\{X, Y, Z\}}$. $P_{A\{X, Y, Z\}}$ collectively denotes $P_{AX}$ in the sort in descending order of X coordinate value, $P_{AY}$ in the sort in descending order of Y coordinate value, and $P_{AZ}$ in the sort in descending order of Z coordinate value for descriptive purposes. The same denotation applies to the $P_{B\{X, Y, Z\}}$ and $P_{C\{X, Y, Z\}}$.

<Step 1-2>

By the equations (9.1) to (9.3), $N_{A\{X, Y, Z\}}$, $N_{B\{X, Y, Z\}}$, and $N_{C\{X, Y, Z\}}$, which are the integer parts of values computed as $[P_{A\{X, Y, Z\}}]$, $[P_{B\{X, Y, Z\}}]$, and $[P_{C\{X, Y, Z\}}]$ divided by $STEP_{\{X, Y, Z\}}$, are computed, respectively.

$$N_{A\{X, Y, Z\}} = \text{ROUNDDOWN}([P_{A\{X, Y, Z\}}]/STEP_{\{X, Y, Z\}}). \ldots . (9.1)$$

$$N_{B\{X, Y, Z\}} = \text{ROUNDDOWN}([P_{B\{X, Y, Z\}}]/STEP_{\{X, Y, Z\}}). \ldots . (9.2)$$

$$N_{C\{X, Y, Z\}} = \text{ROUNDDOWN}([P_{C\{X, Y, Z\}}]/STEP_{\{X, Y, Z\}}). \ldots . (9.3)$$

In the above equations, $[P_{A\{X, Y, Z\}}]$ collectively denotes the X coordinate value of $P_{AX}$, Y coordinate value of $P_{AY}$, and Z coordinate value of $P_{AZ}$ for descriptive purposes. The same denotation applies to $[P_{B\{X, Y, Z\}}]$ and $[P_{C\{X, Y, Z\}}]$. $STEP_{\{X, Y, Z\}}$ collectively denotes $STEP_X$, $STEP_Y$, and $STEP_Z$ for descriptive purposes. The integer part $N_{A\{X, Y, Z\}}$ collectively denotes the integer part $N_{AX}$ of a value computed as the X coordinate value of $P_{AX}$ divided by $STEP_X$, the integer part $N_{AY}$ of a value computed as the Y coordinate value of $P_{AY}$ divided by $STEP_Y$, and the integer part $N_{AZ}$ of a value computed as the Z coordinate value of $P_{AZ}$ divided by $STEP_Z$ for descriptive purposes. The same denotation applies to the integer part $N_{B\{X, Y, Z\}}$ and integer part $N_{C\{X, Y, Z\}}$. ROUNDDOWN is a function that truncates digits after the decimal point, for example, ROUNDDOWN(1.23)=1.

<Step 1-3>

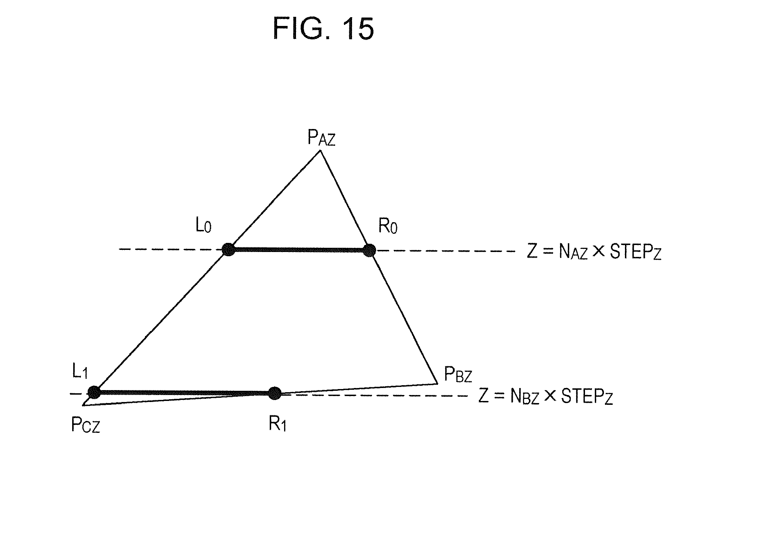

For the integer parts $N_{AX}$, $N_{BX}$, and $N_{CX}$ in the sort in descending order of X coordinate values, (A) if $N_{AX} \neq N_{BX}$ and $N_{BX} = N_{CX}$, a line segment $L_0 R_0$ exemplified in FIG. 15 is computed and coordinate information of the computed line segment $L_0 R_0$ is registered in grid data GD as a line of intersection with an X-axis grid plane, (B) if $N_{AX} = N_{BX}$ and $N_{BX} \neq N_{CX}$, a line segment $L_1 R_1$ exemplified in FIG. 15 is computed and coordinate information of the computed line segment $L_1 R_1$ is registered in the grid data GD as a line of intersection with an X-axis grid plane, and (C) neither (A) nor (B) is applicable, no line of intersection with an X-axis grid plane is registered in the grid data GD.

Similarly, for the integer parts $N_{AY}$, $N_{BY}$, and $N_{CY}$ in the sort in descending order of Y coordinate values, registration processing of lines of intersection with Y-axis grid planes are carried out, and, for the integer parts $N_{AZ}$, $N_{BZ}$, and $N_{CZ}$ in the sort in descending order of Z coordinate values, registration processing of lines of intersection with Z-axis grid planes are carried out.

FIG. 15 is a diagram exemplifying a case in which the apexes $P_0$, $P_1$, and $P_2$ of a triangle $\{P_0, P_1, P_2\}$ are sorted in descending order of Z coordinate values, and for a description of a method to compute a line of intersection with a grid plane by using the Z-axis grid plane as an example. In the following description, as exemplified in FIG. 15, among two intersection points between a Z-axis grid plane $z = N_{AZ} \times STEP_Z$, which is parallel to the XY-plane, and a triangle $\{P_{AZ}, P_{BZ}, P_{CZ}\}$, the left intersection point is denoted by $L_0$ and the right intersection point is denoted by $R_0$, and, among two intersection points between a Z-axis grid plane $z = N_{BZ} \times STEP_Z$, which is parallel to the XY-plane, and a triangle $\{P_{AZ}, P_{BZ}, P_{CZ}\}$, the left intersection point is denoted by $L_1$ and the right intersection point is denoted by $R_1$.

Then, intersection points $L_0$, $R_0$, $L_1$, and $R_1$ may be computed by the following equations, respectively.

$$L_{0\{X, Y, Z\}} = (1 - k_{L0\{X, Y, Z\}}) \times P_{A\{X, Y, Z\}} + k_{L0\{X, Y, Z\}} \times P_{C\{X, Y, Z\}} \cdot \ldots \cdot$$

$$(10.1a)$$

$$k_{L0\{X, Y, Z\}} = \frac{[P_{A\{X, Y, Z\}}] - N_{A\{X, Y, Z\}} \times STEP_{\{X, Y, Z\}}}{[P_{A\{X, Y, Z\}}] - [P_{C\{X, Y, Z\}}]} \quad \cdots (10.1b)$$

$$L_{1\{X, Y, Z\}} = (1 - k_{L1\{X, Y, Z\}}) \times P_{A\{X, Y, Z\}} + k_{L1\{X, Y, Z\}} \times P_{C\{X, Y, Z\}} \cdot \ldots \cdot$$

$$(10.2a)$$

$$k_{L1\{X, Y, Z\}} = \frac{[P_{A\{X, Y, Z\}}] - N_{B\{X, Y, Z\}} \times STEP_{\{X, Y, Z\}}}{[P_{A\{X, Y, Z\}}] - [P_{C\{X, Y, Z\}}]} \quad \cdots (10.2b)$$

$$R_{0\{X, Y, Z\}} = (1 - k_{R0\{X, Y, Z\}}) \times P_{A\{X, Y, Z\}} + k_{R0\{X, Y, Z\}} \times P_{B\{X, Y, Z\}} \cdot \ldots \cdot$$

$$(10.3a)$$

$$k_{R0\{X,Y,Z\}} = \frac{[P_{A\{X,Y,Z\}}] - N_{A\{X,Y,Z\}} \times STEP_{\{X,Y,Z\}}}{[P_{A\{X,Y,Z\}}] - [P_{B\{X,Y,Z\}}]} \quad \cdots\cdots (10.3b)$$

$$R_{1\{X,Y,Z\}} = (1 - k_{R1\{X,Y,Z\}}) \times P_{B\{X,Y,Z\}} + k_{R1\{X,Y,Z\}} \times P_{C\{X,Y,Z\}} \cdots \cdots$$

$$(10.4a)$$

$$k_{R1\{X,Y,Z\}} = \frac{[P_{B\{X,Y,Z\}}] - N_{B\{X,Y,Z\}} \times STEP_{\{X,Y,Z\}}}{[P_{B\{X,Y,Z\}}] - [P_{C\{X,Y,Z\}}]} \quad \cdots\cdots (10.4b)$$

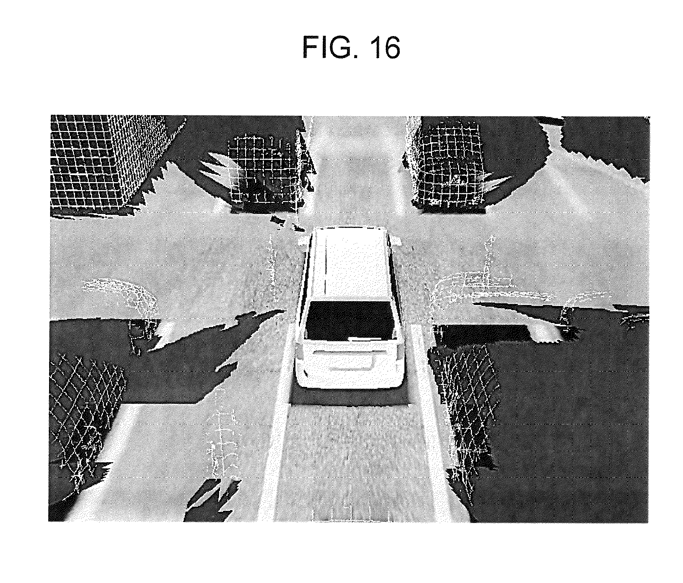

As described above, the outline of a cross-sectional shape created by cutting a three-dimensional polygon P constituting the object projection plane with the {X-axis, Y-axis, Z-axis} grid planes is registered in the grid data GD as lines of intersection. It becomes possible to superimpose grid cross-sections onto an image of objects around the car, as exemplified in FIG. 16, by superimposing line segment information registered in the grid data GD on a result of visualization of circumstances around the car imaged by the cameras 3. FIG. 16 is a diagram illustrating an example of a result of the image processing of the first embodiment.

In this processing, images imaged by the cameras 3 may be superimposed as texture images by giving texture coordinates Q to three-dimensional polygons P registered in the polygon data PD. By superimposing line segment information registered in the grid data GD onto objects around the car after drawing the objects with texture images drawn thereon, it becomes possible to fulfill recognition of objects based on colors or patterns and understanding of object shapes based on lines of intersection at the same time.

In this case, when a triangle $\{P_0, P_1, P_2\}$ is registered in the polygon data PD, because each apex $P_0$, $P_1$, and $P_2$ (denoted by $P_{\{0,1,2\}}$ in the equation) is defined in the car coordinate system $C_{CAR}$, the texture coordinate $Q_{\{0,1,2\}}$ of each apex may be computed by the above-described equations (2) to (4) and the equation (11).

$$Q_{\{0,1,2\}} = T_C(-M_{CAR \to CAM} \times P_{\{0,1,2\}}). \cdots \cdots (11)$$

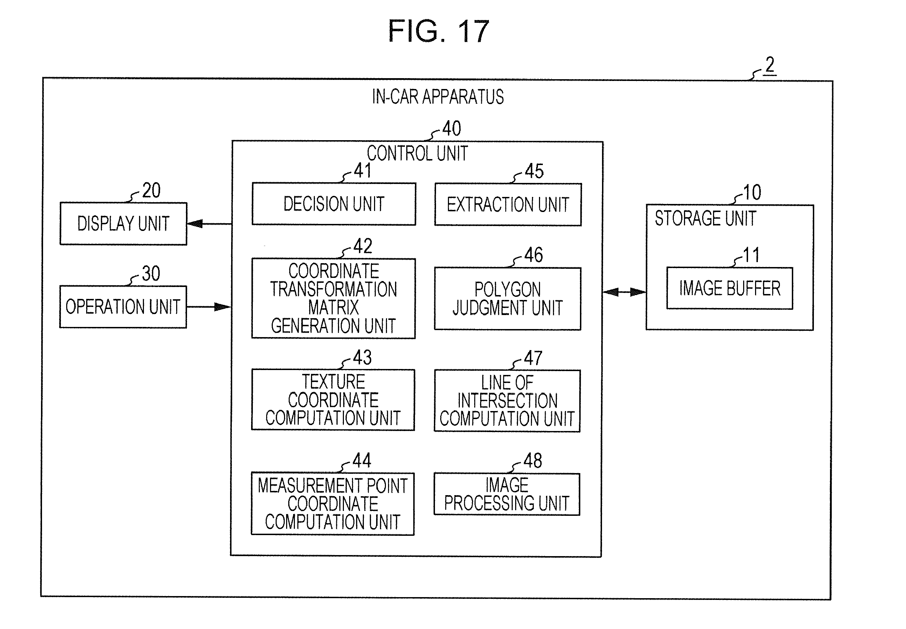

Next, referring to FIG. 17, the in-car apparatus 2 of the first embodiment will be described below. FIG. 17 is a functional block diagram illustrating a configuration example of the in-car apparatus 2 of the first embodiment. The in-car apparatus 2 of the first embodiment is, as illustrated in FIG. 17, configured with a storage unit 10, display unit 20, operation unit 30, and control unit 40.

The storage unit 10 is configured with a random access memory (RAM), read only memory (ROM), hard disk drive (HDD), or the like. The storage unit 10 functions as a work area for a component configuring the control unit 40, for example, a central processing unit (CPU), as a program area that stores various programs such as an operation program which controls the whole of the in-car apparatus 2, and as a data area that stores various data such as installation parameters of the cameras 3 and range sensors 4, the polygon data PD, and the grid data GD. Furthermore, in the data area of the storage unit 10, the mapping table $T_C$ of each camera 3, the scan vector table $T_S$ of each range sensor 4, and so on are stored.

Moreover, the storage unit 10 also functions as an image buffer 11, which stores image data of the surroundings around the car imaged by the camera 3.

The display unit 20 is configured with a display device such as a liquid crystal display (LCD) and organic electro-luminescence (EL) and displays, for example, an image of the surroundings around the car, to which predetermined image processing is applied, various functional buttons, and the like on a display screen.

The operation unit 30 is configured with various buttons, a touch panel which is displayed on a display screen of the display unit 20, and so on. It is possible for a user (driver or the like) to make desired processing carried out by operating the operation unit 30.

The control unit 40 is configured with, for example, a CPU or the like, fulfills functions, as illustrated in FIG. 17, as a decision unit 41, coordinate transformation matrix generation unit 42, texture coordinate computation unit 43, measurement point coordinate computation unit 44, extraction unit 45, polygon judgment unit 46, line of intersection computation unit 47, and image processing unit 48 by running the operation program stored in the program area of the storage unit 10, and also carries out processing such as control processing, which controls the whole of the in-car apparatus 2, and image processing, which will be described in detail later.

The decision unit 41 decides whether or not ending of image processing, which will be described in detail later, is commanded. The decision unit 41, for example, decides that ending of image processing is commanded when a predefined operation is carried out by the user via the operation unit 30. The decision unit 41, for example, also decides that ending of image processing is commanded when a predefined ending condition is satisfied, for example, when the gear lever of the car on which the in-car apparatus 2 is mounted is shifted to the park.

The coordinate transformation matrix generation unit 42 generates a coordinate transformation matrix $M_{CAR \to CAM}$ from the car coordinate system $C_{CAR}$ to the camera coordinate system $C_{CAM}$ for each camera 3 by the above-described equation (1), based on installation parameters of each camera 3, which are stored in the data area of the storage unit 10. The coordinate transformation matrix generation unit 42 also generates a coordinate transformation matrix $M_{CAR \to SNSR}$ from the car coordinate system $C_{CAR}$ to the range sensor coordinate system $C_{SNSR}$ for each range sensor 4 by the above-described equation (6), based on installation parameters of each range sensor 4, which are stored in the data area of the storage unit 10.

The texture coordinate computation unit 43 computes the texture coordinate Q of each apex of a three-dimensional polygon (projection plane polygon) P which constitutes a virtual stereoscopic projection plane based on images imaged by the cameras 3 in order to visualize circumstances in the entire surroundings around the car. Specifically, the texture coordinate computation unit 43 computes the texture coordinate Q of each apex of a projection plane polygon P by the above-described equations (1) to (4).

Moreover, the texture coordinate computation unit 43 computes the texture coordinate Q of each apex of a three-dimensional polygon P registered in the polygon data PD by the above-described equations (1) to (4).

The measurement point coordinate computation unit 44, when a distance $D(m, n)$ to a measurement point on a peripheral object, which is transmitted by a range sensor 4, is received, computes the measurement point coordinate $P_{SNSR}(m, n)$ of the peripheral object in the range sensor coordinate system $C_{SNSR}$ based on the received distance $D(m, n)$ by the above-described equation (5). In this computation, the measurement point coordinate computation unit 44, referring to the scan vector table $T_S$ stored in the data area of the storage unit 10, identifies a scan vector $V_S(m, n)$ that corresponds to a scanning direction specified by direction information input with the distance $D(m, n)$.

Moreover, the measurement point coordinate computation unit 44 transforms the computed measurement point coordinate $P_{SNSR}(m, n)$ in the range sensor coordinate system $C_{SNSR}$ to a measurement point coordinate $P_{CAR}(m, n)$ in the car coordinate system $C_{CAR}$ by the above-described equations (6) and (7).

The extraction unit 45 extracts measurement point coordinates $P_{CAR}(m, n)$ which belong to the stereoscopic point group data PG2 by the above-described extraction method from among the measurement point coordinates $P_{CAR}(m, n)$ in the car coordinate system $C_{CAR}$ computed by the measurement point coordinate computation unit 44.

The polygon judgment unit 46, by judging whether or not a figure formed by adjacent measurement points among measurement points belonging to the stereoscopic point group data PG2 and extracted by the extraction unit 45 (for example, triangle) satisfies predefined conditions (the above-described equations (8.1) to (8.4)), decides whether or not the figure is three-dimensional polygon P which constitutes an object projection plane. The polygon judgment unit 46 registers the figure decided to be a three-dimensional polygon P constituting the object projection plane to the polygon data PD.

The line of intersection computation unit 47 computes lines of intersection with {X-axis, Y-axis, Z-axis} grid planes for all three-dimensional polygon P registered in the polygon data PD by the polygon judgment unit 46 by the above-described process steps 1-1 to 1-3, and registers the computed lines of intersection in the grid data GD.

The image processing unit 48, based on images which are imaged by the cameras 3 and stored in the image buffer 11, carries out image drawing processing. More specifically, the image processing unit 48, by carrying out the image drawing processing by using images stored in the image buffer 11 as texture images based on the texture coordinate Q of each apex of a projection plane polygon P which is computed by the texture coordinate computation unit 43, generates a virtual stereoscopic projection plane on which circumstances in the entire surroundings around the car are projected.

Moreover, the image processing unit 48, by carrying out the image drawing processing by using images stored in the image buffer 11 as texture images, based on the texture coordinate Q, which is computed by the texture coordinate computation unit 43, of each apex of a three-dimensional polygon P constituting the object projection plane, superimposes peripheral objects such as pedestrians on the stereoscopic projection plane.

Furthermore, the image processing unit 48 superimposes lines of intersections registered in the grid data GD by three-dimensional CG on images of the peripheral objects drawn with texture images drawn thereon. Then, the image processing unit 48, by controlling the display unit 20, makes the drawn image displayed on the display screen.

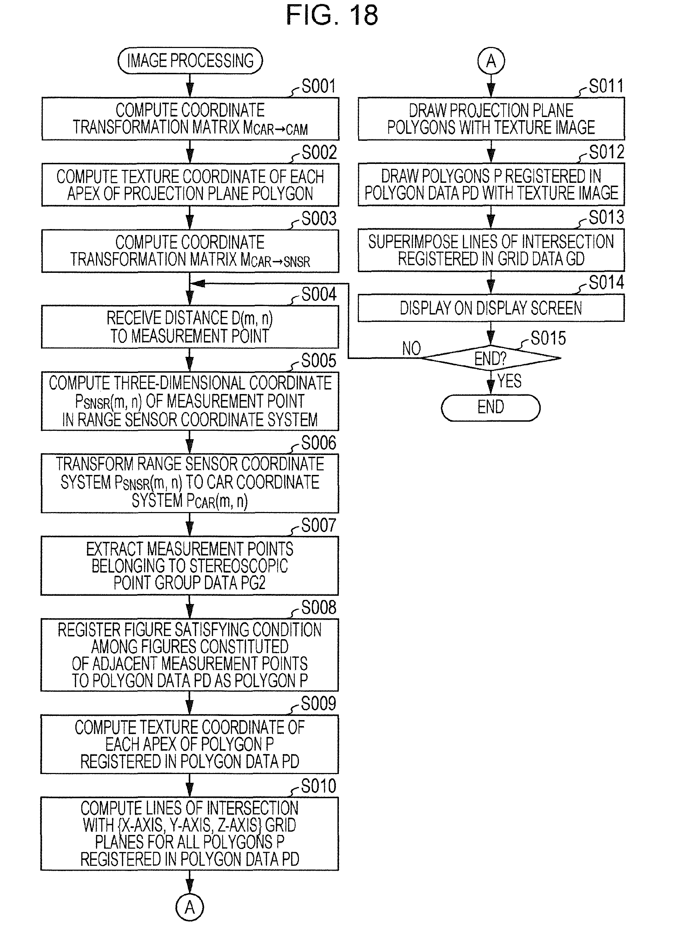

Next, referring to FIG. 18, a flow of the image processing of the first embodiment will be described below. FIG. 18 is an example of a flowchart for a description of an image processing flow of the first embodiment. The image processing is started, for example, by using an event that image data of the images imaged by the cameras 3 are stored in the image buffer 11 as a trigger.

The coordinate transformation matrix generation unit 42, based on installation parameters of each camera 3, generates the coordinate transformation matrix $M_{CAR \rightarrow CAM}$ from the car coordinate system $C_{CAR}$ to the camera coordinate system $C_{CAM}$ for each camera 3 (step S001). Then, the texture coordinate computation unit 43 computes the texture coordinate Q of each apex of a projection plane polygon P constituting the virtual stereoscopic projection plane (step S002).

Further, the coordinate transformation matrix generation unit 42, based on installation parameters of each range sensor 4, generates the coordinate transformation matrix $M_{CAR \rightarrow SNSR}$ from the car coordinate system $C_{CAR}$ to the range sensor coordinate system $C_{SNSR}$ for each range sensor 4 (step S003).

When the measurement point coordinate computation unit 44 receives distance D(m, n) transmitted by the range sensor 4 (step S004), the measurement point coordinate computation unit 44, based on the received distance D(m, n), computes the measurement point coordinate $P_{SNSR}$(m, n) of a peripheral object in the range sensor coordinate system $C_{SNSR}$ (step S005), and further transforms the computed measurement point coordinate $P_{SNSR}$(m, n) to the measurement point coordinate $P_{CAR}$(m, n) in the car coordinate system $C_{CAR}$ (step S006).

The extraction unit 45, from among measurement point coordinates $P_{CAR}$(m, n) in the car coordinate system $C_{CAR}$ computed by the measurement point coordinate computation unit 44, extracts measurement point coordinates $P_{CAR}$(m, n) belonging to the stereoscopic point group data PG2 (step S007). The polygon judgment unit 46, among the measurement points extracted by the extraction unit 45 and belonging to the stereoscopic point group data PG2, judges whether or not a figure constituted of adjacent measurement points is a three-dimensional polygon P constituting the object projection plane, and registers the figure that is judged the three-dimensional polygon P constituting the object projection plane in the polygon data PD (step S008).

The texture coordinate computation unit 43 computes the texture coordinate Q of each apex of a three-dimensional polygon P registered in the polygon data PD (step S009). The line of intersection computation unit 47 computes lines of intersection with the {X-axis, Y-axis, Z-axis} grid planes for a three-dimensional polygon P registered in the polygon data PD and registers the computed lines of intersection in the grid data GD (step S010).

The image processing unit 48, by carrying out image drawing processing by using images stored in the image buffer 11 as texture images and based on the texture coordinate Q of each apex of a projection plane polygon P, generates the virtual stereoscopic projection plane on which circumstances in the entire surroundings around the car are projected (step S011).

The image processing unit 48, by carrying out image drawing processing by using images stored in the image buffer 11 as texture images and based on the texture coordinate Q of each apex of a three-dimensional polygon P registered in the polygon data PD, superimposes peripheral objects such as pedestrians on the stereoscopic projection plane (step S012).

The image processing unit 48 then superimposes lines of intersection registered in the grid data GD by three-dimensional CG on images of the peripheral objects drawn with texture images drawn thereon (step S013), and controls the display unit 20 to make the drawn images displayed on the display screen (step S014).

The decision unit 41 decides whether or not ending of the image processing is commanded (step S015). When the decision unit 41 decides that ending of the image processing is not commanded (NO in step S015), the process returns to the processing in step S004, and the above-described processing is carried out. On the other hand, the decision unit 41 decides that ending of the image processing is commanded (YES in step S015), the image processing is ended.

According to the above-described first embodiment, when a peripheral object measured by range sensors 4 installed on a car are reconstituted on a virtual stereoscopic projection plane for visualization, lines of intersection (grid lines) between {X-axis, Y-axis, Z-axis} grid planes and the peripheral object are displayed. Such configuration makes it possible to grasp the shape of the peripheral object easily without depending on color or brightness of the peripheral objects. With this configuration, it becomes possible for a driver to grasp circumstances around the car accurately, which contributes to safe driving.

According to the above-described first embodiment, grid planes are arranged with a uniform interspace. Such configuration makes it easy to grasp the size of the peripheral object. Further, by utilizing width of an interspace between grids on an image, it becomes possible to grasp distance to the peripheral object easily. In other words, it becomes possible to grasp circumstances in the surroundings around a car more accurately.

According to the above-described first embodiment, lines of intersection (grid lines) are superimposed on an image of a peripheral object drawn with texture images drawn thereon. Such configuration makes it possible to implement existence recognition of peripheral objects by color and pattern and shape understanding of the peripheral objects by lines of intersection (grid lines) at the same time.

According to the above-described first embodiment, by excluding figures in which the inclination of a surface normal with respect to the sensor origin direction of a range sensor 4 surpasses a predefined threshold among figures constituted of adjacent measurement points, three-dimensional polygons P constituting the object projection plane are generated. Such configuration makes it possible to reduce an inconvenience such as generating an object projection plane that does not exist intrinsically between separate objects.

According to the above-described first embodiment, the measurement point coordinates $P_{CAR}(m, n)$ belonging to the stereoscopic point group data PG2 are extracted from among measurement point coordinates $P_{CAR}(m, n)$. In other words, measurement points on the road surface that are not desired for constituting the object projection plane are excluded. Such configuration makes it possible to reduce processing targets and improve processing speed.

(Second embodiment)

In the first embodiment, an in-car system is configured to compute lines of intersection between {X-axis, Y-axis, Z-axis} grid planes defined in the car coordinate system $C_{CAR}$ and a three-dimensional polygon P constituting an object projection plane and to superimpose the line of intersections on peripheral objects.

In the second embodiment, an in-car system is configured to use {X-axis, Y-axis, Z-axis} grid planes defined in a world coordinate system $C_{WORLD}$, in which coordinates do not change even when a car moves.

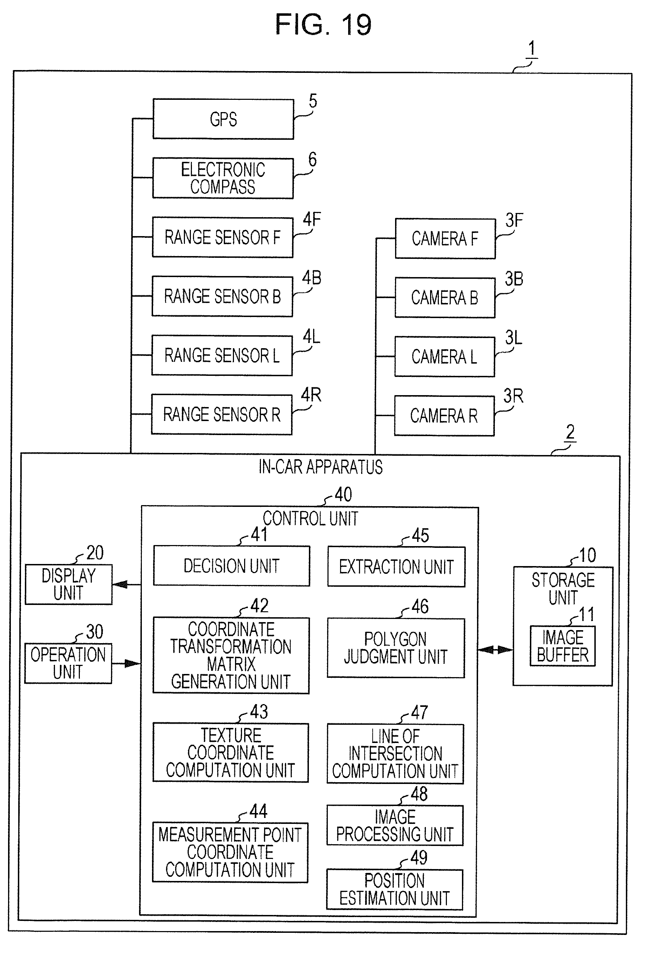

FIG. 19 is a functional block diagram illustrating a configuration example of an in-car system 1 of the second embodiment. The configuration of the in-car system 1 of the second embodiment is the same as in the case of the first embodiment in principle. However, as illustrated in FIG. 19, the second embodiment differs from the first embodiment in respect that the in-car system 1 further has a global positioning system (GPS) 5 and an electronic compass 6 and the control unit 40 of the in-car apparatus 2 also functions as a position estimation unit 49. In addition, the role which portions of common functional units (coordinate transformation matrix generation unit 42 and line of intersection computation unit 47) of the control unit 40 play is slightly different from the case of the first embodiment.

The GPS 5 computes three-dimensional position coordinate of the car at a predetermined timing and transmits the computed three-dimensional position coordinate of the car to the in-car apparatus 2.

The electronic compass 6 computes azimuth of the car at a predetermined timing and transmits the computed azimuth of the car to the in-car apparatus 2.

The control unit 40 is, for example, configured with a CPU or the like, carries out an operation program stored in the program area of the storage unit 10, implements functions as, as illustrated in FIG. 19, the decision unit 41, coordinate transformation matrix generation unit 42, texture coordinate computation unit 43, measurement point coordinate computation unit 44, extraction unit 45, polygon judgment unit 46, line of intersection computation unit 47, image processing unit 48, and position estimation unit 49, and also carries out processing such as control processing which controls the whole of the in-car apparatus 2 and image processing, which will be described later.

The position estimation unit 49, based on the three-dimensional position coordinate of the car computed by the GPS 5 and azimuth of the car computed by the electronic compass 6, estimates the position of the car in the world coordinate system $C_{WORLD}$ (three-dimensional coordinate of the car origin O) and the direction (rotation angle around the Z-axis in the world coordinate system $C_{WORLD}$).

The world coordinate system $C_{WORLD}$ may be set in an arbitrary way. The world coordinate system $C_{WORLD}$ may be defined based on features the position of which is fixed, the meridian line, and so on, or may be defined based on the position and direction of the car when the engine is started. Moreover, for example, a relative position coordinate and relative angle estimated by using a car speed sensor, a gyro sensor, or the like may be used.

The coordinate transformation matrix generation unit 42, along with the processing described in regard to the first embodiment, generates a coordinate transformation matrix $M_{CAR \to WORLD}$ from the car coordinate system $C_{CAR}$ to the world coordinate system $C_{WORLD}$ based on the position and direction of the car in the world coordinate system $C_{WORLD}$ estimated by the position estimation unit 49.

More specifically, when the three-dimensional coordinate of the car origin O in the world coordinate system $C_{WORLD}$ estimated by the position estimation unit 49 is denoted by $(A_X, A_Y, A_Z)$, and the rotation angle around the Z-axis in the world coordinate system $C_{WORLD}$ is denoted by $R_Z$, the coordinate transformation matrix generation unit 42 generates an coordinate transformation matrix $M_{CAR \to WORLD}$ expressed by the equation (12).

$$M_{CAR \to WORLD} = \begin{pmatrix} \cos R_Z & -\sin R_Z & 0 & A_X \\ \sin R_Z & \cos R_Z & 0 & A_Y \\ 0 & 0 & 1 & A_Z \\ 0 & 0 & 0 & 1 \end{pmatrix} \quad \cdots\cdots (12)$$

The line of intersection computation unit 47, by the after-mentioned processing of steps 2-0 to 2-3, computes lines of intersection between a three-dimensional polygon P registered in the polygon data PD and {X-axis, Y-axis, Z-axis} grid planes, which are defined with respect to {X, Y, Z}-axis of the world coordinate system $C_{WORLD}$ with an equal interspace of $STEP_{\{X, Y, Z\}}$, and registers the computed lines of intersection in the grid data GD.

When {X-axis, Y-axis, Z-axis} grid planes are configured as described above and a triangle $\{P_0, P_1, P_2\}$ is registered in the polygon data PD as a three-dimensional polygon P, lines of intersection between the triangle $\{P_0, P_1, P_2\}$, which is a three-dimensional polygon P, and {X-axis, Y-axis, Z-axis} grid planes may be computed by the following process (steps 2-0 to 2-3).

<Step 2-0>

The apex coordinates $P_0$, $P_1$, and $P_2$ of the triangle $\{P_0, P_1, P_2\}$, which are defined in the car coordinate system $C_{CAR}$, are transformed to apex coordinates $P^W_0$, $P^W_1$, and $P^W_2$ in the world coordinate system $C_{WORLD}$ by the equation (13), respectively. $P_{\{0, 1, 2\}}$ in the equation collectively denotes the apex coordinates $P_0$, $P_1$, and $P_2$ for descriptive purposes. This applies to $P^W_{\{0, 1, 2\}}$ as well.

$$P^W_{\{0, 1, 2\}} = M_{CAR \to WORLD} \times P_{\{0, 1, 2\}}. \dots (13)$$

<Step 2-1>

The apexes $P^W_0$, $P^W_1$, and $P^W_2$ after transformation to coordinates in the world coordinate system $C_{WORLD}$ are sorted in descending order of {X, Y, Z} coordinate values, and the result of the sort is denoted by $P^W_{A\{X, Y, Z\}}$, $P^W_{B\{X, Y, Z\}}$, and $P^W_{C\{X, Y, Z\}}$. $P^W_{A\{X, Y, Z\}}$ collectively denotes $P^W_{AX}$ in the sort in descending order of X coordinate values, $P^W_{AY}$ in the sort in descending order of Y coordinate values, and $P^W_{AZ}$ in the sort in descending order of Z coordinate values for descriptive purposes. This applies to $P^W_{B\{X, Y, Z\}}$ and $P^W_{C\{X, Y, Z\}}$ as well.

<Step 2-2>

The integer parts $N_{A\{X, Y, Z\}}$, $N_{B\{X, Y, Z\}}$, and $N_{C\{X, Y, Z\}}$ of values computed as $[P^W_{A\{X, Y, Z\}}]$, $[P^W_{B\{X, Y, Z\}}]$, and $[P^W_{C\{X, Y, Z\}}]$ divided by $STEP_{\{X, Y, Z\}}$ are computed, respectively, by the equations (14.1) to (14.3).

$$N_{A\{X, Y, Z\}} = ROUNDDOWN([P^W_{A\{X, Y, Z\}}]/STEP_{\{X, Y, Z\}}). \dots (14.1)$$

$$N_{B\{X, Y, Z\}} = ROUNDDOWN([P^W_{B\{X, Y, Z\}}]/STEP_{\{X, Y, Z\}}). \dots (14.2)$$

$$N_{C\{X, Y, Z\}} = ROUNDDOWN([P^W_{C\{X, Y, Z\}}]/STEP_{\{X, Y, Z\}}). \dots (14.3)$$

In the above equations, $[P^W_{A\{X, Y, Z\}}]$ collectively denotes the X coordinate value of $P^W_{AX}$, Y coordinate value of $P^W_{AY}$, and Z coordinate value of $P^W_{AZ}$ for descriptive purposes. This applies to $[P^W_{B\{X, Y, Z\}}]$ and $[P^W_{C\{X, Y, Z\}}]$ as well. In addition, the integer part $N_{A\{X, Y, Z\}}$ collectively denotes the integer part $N_{AX}$ of a value computed as the X coordinate value of $P^W_{AX}$ divided by $STEP_X$, the integer part $N_{AY}$ of a value computed as the Y coordinate value of $P^W_{AY}$ divided by $STEP_Y$, and the integer part $N_{AZ}$ of a value computed as the Z coordinate value of $P^W_{AZ}$ divided by $STEP_Z$ for descriptive purposes. This applies to the integer part $N_{B\{X, Y, Z\}}$ and the integer part $N_{C\{X, Y, Z\}}$ as well.

<Step 2-3>

For the integer parts $N_{AX}$, $N_{BX}$, and $N_{CX}$ in the case of sorting in descending order of X coordinate values, (A) if $N_{AX} \neq N_{BX}$ and $N_{BX} = N_{CX}$, a line segment $L_0R_0$ exemplified in FIG. 15 is computed and the coordinate information of the computed line segment $L_0R_0$ is registered in the grid data GD as a line of intersection with an X-axis grid plane, (B) if $N_{AX} = N_{BX}$ and $N_{BX} \neq N_{CX}$, a line segment $L_1R_1$ exemplified in FIG. 15 is computed and the coordinate information of the computed line segment $L_1R_1$ is registered in the grid data GD as a line of intersection with an X-axis grid plane, and (C) if neither case (A) nor (B) is applicable, no line of intersection with an X-axis grid plane is registered in the grid data GD.

Similarly, for the integer parts $N_{AY}$, $N_{BY}$, and $N_{CY}$ in the case of sorting in descending order of Y coordinate values, registration processing of a line of intersection with a Y-axis grid plane is carried out, and for the integer parts $N_{AZ}$, $N_{BZ}$, and $N_{CZ}$ in the case of sorting in descending order of Z coordinate values, registration processing of a line of intersection with a Z-axis grid plane is carried out.

Intersection points $L_0$, $R_0$, $L_1$, and $R_1$ in the car coordinate system $C_{CAR}$ of the second embodiment may be computed by the following equations, respectively.

$$L_{0\{X, Y, Z\}} = M^{-1}_{CAR \to WORLD}[(1 - k_{L0\{X, Y, Z\}}) \times P^W_{A\{X, Y, Z\}} + k_{L0\{X, Y, Z\}} \times P^W_{C\{X, Y, Z\}}] \ldots \ldots (15.1a)$$

$$k_{L0\{X, Y, Z\}} = \frac{[P^W_{A\{X, Y, Z\}}] - N_{A\{X, Y, Z\}} \times STEP_{\{X, Y, Z\}}}{[P^W_{A\{X, Y, Z\}}] - [P^W_{C\{X, Y, Z\}}]} \quad \cdots \cdots (15.1b)$$

$$L_{1\{X, Y, Z\}} = M^{-1}_{CAR \to WORLD}[(1 - k_{L1\{X, Y, Z\}}) \times P^W_{A\{X, Y, Z\}} + k_{L1\{X, Y, Z\}} \times P^W_{C\{X, Y, Z\}}] \ldots \ldots (15.2a)$$

$$k_{L1\{X, Y, Z\}} = \frac{[P^W_{A\{X, Y, Z\}}] - N_{B\{X, Y, Z\}} \times STEP_{\{X, Y, Z\}}}{[P^W_{A\{X, Y, Z\}}] - [P^W_{C\{X, Y, Z\}}]} \quad \cdots \cdots (15.2b)$$

$$R_{0\{X, Y, Z\}} = M^{-1}_{CAR \to WORLD}[(1 - k_{R0\{X, Y, Z\}}) \times P^W_{A\{X, Y, Z\}} + k_{R0\{X, Y, Z\}} \times P^W_{B\{X, Y, Z\}}] \ldots \ldots (15.3a)$$

$$k_{R0\{X, Y, Z\}} = \frac{[P^W_{A\{X, Y, Z\}}] - N_{A\{X, Y, Z\}} \times STEP_{\{X, Y, Z\}}}{[P^W_{A\{X, Y, Z\}}] - [P^W_{B\{X, Y, Z\}}]} \quad \cdots \cdots (15.3b)$$

$$R_{1\{X, Y, Z\}} = M^{-1}_{CAR \to WORLD}[(1 - k_{R1\{X, Y, Z\}}) \times P^W_{B\{X, Y, Z\}} + k_{R1\{X, Y, Z\}} \times P^W_{C\{X, Y, Z\}}] \ldots \ldots (15.4a)$$

$$k_{R1\{X, Y, Z\}} = \frac{[P^W_{B\{X, Y, Z\}}] - N_{B\{X, Y, Z\}} \times STEP_{\{X, Y, Z\}}}{[P^W_{B\{X, Y, Z\}}] - [P^W_{C\{X, Y, Z\}}]} \quad \cdots \cdots (15.4b)$$

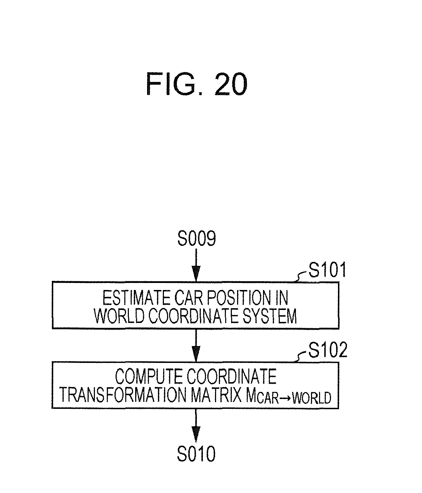

Next, referring to FIG. 20, an image processing flow of the second embodiment will be described below. FIG. 20 is a portion of an example of a flowchart for a description of an image processing flow of the second embodiment. The image processing of the second embodiment differs from the case of the first embodiment in regard to additional processing being added between step S009 and step S010. Therefore, the additional processing (steps S101 and S102) and step S010 will be described below.

After step S009, the process proceeds to the processing of step S101, in which the position estimation unit 49, based on the three-dimensional position coordinate of the car computed by the GPS 5 and the azimuth of the car computed by the electronic compass 6, estimates a position and direction of the car in the world coordinate system

$C_{WORLD}$ (step S101).

The coordinate transformation matrix generation unit 42, based on the position and direction of the car in the world coordinate system $C_{WORLD}$ estimated by the position estimation unit 49, generates a coordinate transformation matrix $M_{CAR \rightarrow WORLD}$ from the car coordinate system $C_{CAR}$ to the world coordinate system $C_{WORLD}$ (step S102).

The line of intersection computation unit 47 computes lines of intersection between a three-dimensional polygon P registered in the polygon data PD and {X-axis, Y-axis, Z-axis} grid planes defined in the world coordinate system $C_{WORLD}$, and registers the computed lines of intersection in the grid data GD (step S010). Then, the process proceeds to the processing of step S011 described in respect to the first embodiment.

According to the above-described second embodiment, lines of intersection with grid planes defined in the world coordinate system $C_{WORLD}$ are superimposed on peripheral objects. With this configuration, lines of intersection on peripheral objects which stand still are displayed as stationary images even when the car is moving, and it therefore becomes easy to grasp a movement of the car with respect to a surrounding environment intuitively.

(Third embodiment)

In a third embodiment, an in-car system is configured so as to change, for example, color, brightness, transmittance, or the like of lines of intersection (grid lines) in accordance with distance from the car. An example in which color of lines of intersection (grid lines) is changed in accordance with distance from the car will be described below. This configuration may be applied to both configurations of the first embodiment and second embodiment.

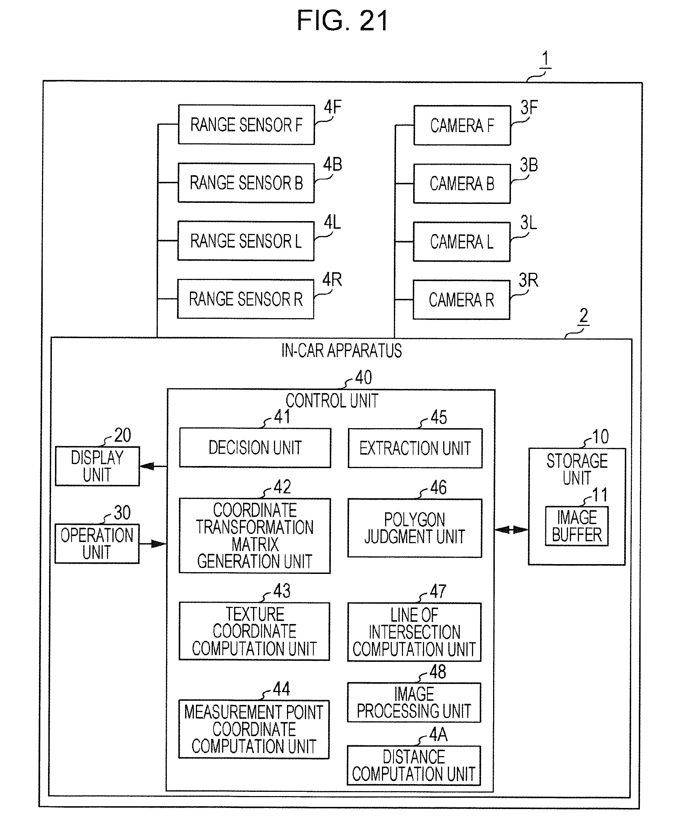

FIG. 21 is a functional block diagram illustrating a configuration example of the in-car system 1 of the third embodiment. The configuration of the in-car system 1 of the third embodiment is the same as the configuration of the first embodiment in principle. However, as illustrated in FIG. 21, the configuration of the third embodiment differs from the configuration of the first embodiment in respect that the control unit 40 of the in-car apparatus 2 further functions as a distance computation unit 4A. In addition, the role which a portion of common functional units of the control unit 40 (image processing unit 48) plays is slightly different from the role of the first embodiment. Furthermore, a color map which maps a distance to a color is also stored in the data area of the storage unit 10.

The control unit 40 is, for example, configured with a CPU or the like, carries out an operation program stored in the program area of the storage unit 10, implements functions as, as illustrated in FIG. 21, the decision unit 41, coordinate transformation matrix generation unit 42, texture coordinate computation unit 43, measurement point coordinate computation unit 44, extraction unit 45, polygon judgment unit 46, line of intersection computation unit 47, image processing unit 48, and distance computation unit 4A, and also carries out processing such as control processing which controls the whole of the in-car apparatus 2 and image processing, which will be described later.

The distance computation unit 4A, based on the intersection point coordinates of lines of intersection registered in the grid data GD, computes intersection point distance, for example, from the car origin O to each intersection point.

The image processing unit 48, when lines of intersection are superimposed on peripheral objects, referring to the color map, sets a color corresponding to the intersection point distance of each intersection point computed by the distance computation unit 4A, and changes the color of a line of intersection (grid line) in accordance with distance from the car.

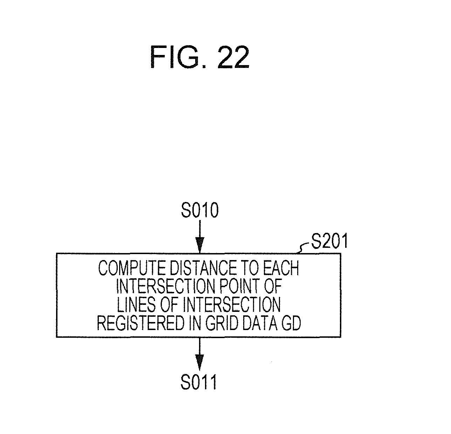

Next, referring to FIG. 22, an image processing flow of the third embodiment will be described below. FIG. 22 is a portion of an example of a flowchart for a description of an image processing flow of the third embodiment. The image processing of the third embodiment differs from the image processing of the first embodiment in respect of additional processing (step S201) being added between step S010 and step S011. Therefore, processing from the additional step S201 to step S013 will be described below.

After processing of step S010, the process proceeds to step S201, and the distance computation unit 4A, based on the intersection point coordinates of lines of intersection registered in the grid data GD, computes intersection point distance of each intersection point (step S201).

The image processing unit 48, by carrying out image drawing processing by using images stored in the image buffer 11 as texture images and based on the texture coordinate Q of each apex of projection plane polygons P, generates a virtual stereoscopic projection plane on which circumstances in the entire surroundings around the car are projected (step S011).

Furthermore, the image processing unit 48, by carrying out image drawing processing by using images stored in the image buffer 11 as texture images and based on the texture coordinate Q of each apex of three-dimensional polygons P registered in the polygon data PD, superimposes peripheral objects such as pedestrians on the stereoscopic projection plane (step S012).

Moreover, the image processing unit 48 superimposes lines of intersection registered in the grid data GD by three-dimensional CG on the peripheral object images drawn with texture images drawn thereon (step S013). In this processing, the image processing unit 48, referring to the color map, sets a color corresponding to an intersection point distance of each intersection point computed by the distance computation unit 4A, and changes the color of a line of intersection (grid line) in accordance with the distance from the car. Then, the process proceeds to the processing of step S014 described in respect to the first embodiment.

According to the above-described third embodiment, display processing is carried out by changing color, brightness, or the like of a line of intersection (grid line) in accordance with distance from the car. With this configuration, it becomes easy to grasp front-back relations among overlapping peripheral objects, also becomes possible to grasp circumstances in the surroundings around the car more accurately.

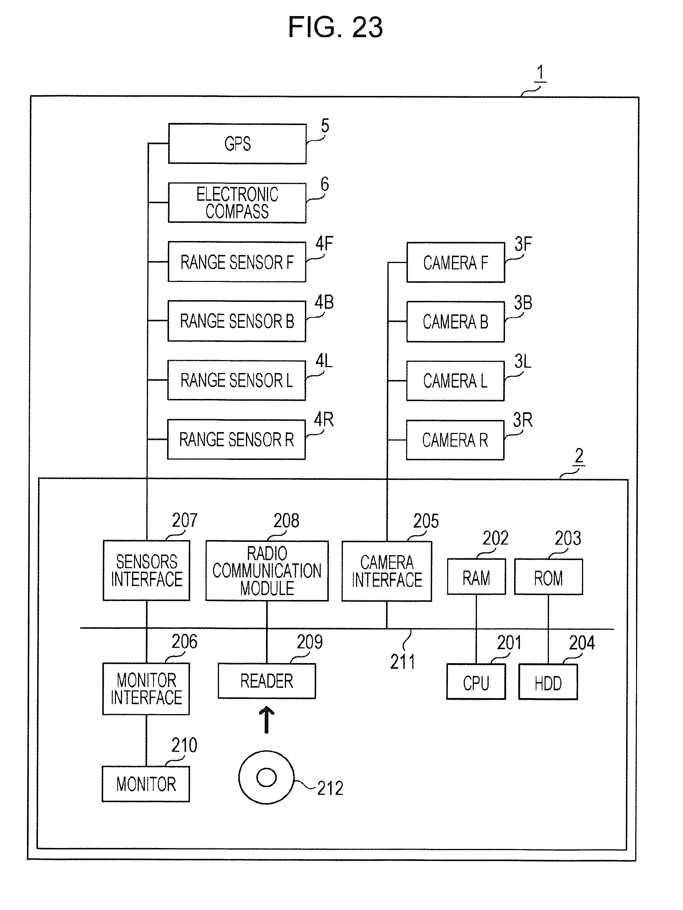

FIG. 23 is a diagram illustrating an example of a hardware configuration of the in-car system 1 of each embodiment. The in-car apparatus 2 illustrated in FIGs. 17, 19, and 21, for example, may be implemented with various types of hardware illustrated in FIG. 23. In the example in FIG. 23, the in-car apparatus 2 has a camera interface 205 to which the CPU 201, RAM 202, ROM 203, HDD 204, and camera 3 are connected, a monitor interface 206 to which the monitor 210 is connected, a sensors interface 207 to which sensors such as the range sensor 4 are connected, radio communication module 208, and reader 209, and these hardware are interconnected via a bus 211.

The CPU 201 loads an operation program stored in the HDD 204 on the RAM 202, and carries out various processing with using the RAM 202 as a working memory. The CPU 201 may implement each functional unit of the control unit 40 illustrated in FIGs. 17, 19, and 21 by carrying out the operation program.

The in-car system may be configured to carry out the above-described processing by making the operation program for carrying out the above-described operation stored in a computer-readable storage medium 212 such as a flexible disk, compact disk-read only memory (CD-ROM), digital versatile disk (DVD), and magnet optical disk (MO), distributed thereby, read by the reader 209 of the in-car apparatus 2, and installed on a computer. In addition, it is also possible to carry out the above-described processing by making the operation program stored in a disk device or the like installed in a server apparatus on the Internet and, via the radio communication module 208, downloaded to the computer of the in-car apparatus 2.

Other types of storage device other than the RAM 202, ROM 203, and HDD 204 may be used according to an embodiment. For example, the in-car apparatus 2 may have storage devices such as a content addressable memory (CAM), static random access memory (SRAM), and synchronous dynamic random access memory (SDRAM).

The radio communication module 208 is a piece of hardware which carries out physical layer processing in the radio connection. The radio communication module 208 includes, for example, an antenna, analog-to-digital converter (ADC), digital-to-analog converter (DAC), modulator, demodulator, encoder, decoder, and so on.

According to an embodiment, the hardware configuration of the in-car system 1 may be different from the configuration illustrated in FIG. 23 and other types of hardware which have standards or types other than the standard or type of hardware exemplified in FIG. 23 may be applied to the in-car system 1.

For example, each functional unit of the control unit 40 of the in-car apparatus 2 illustrated in FIGs. 17, 19, and 21 may be implemented with a hardware circuit. Specifically, each functional unit of the control unit 40 illustrated in FIGs. 17, 19, and 21 may be implemented with a reconfigurable circuit such as field programmable gate array (FPGA), an application specific integrated circuit (ASIC), or the like instead of the CPU 201. These functional units may naturally be implemented with both the CPU 201 and a hardware circuit.

Various embodiments have been described above. However, it will be appreciated that embodiments are not limited to the above-described embodiments but include various modified embodiments and alternative embodiments of the above-described embodiments. For example, it will be understood that various embodiments may be practiced by modifying elements without departing from the spirit and scope of this disclosure. Moreover, it will be understood that various embodiments may be practiced by appropriately combining a plurality of elements disclosed in the above-described embodiments. Furthermore, it will be understood by those skilled in the art that various embodiments may be practiced by removing or replacing some elements out of all elements illustrated in the embodiments, or adding some elements to the elements illustrated in the embodiments.

**Claims**

1. An image processing apparatus that, based on an image imaged by a camera installed on a car and distance to a measurement point on a peripheral object computed by a range sensor installed on the car, draws virtual three-dimensional space in which a surrounding environment around the car is reconstructed, the image processing apparatus comprising:

    an outline computation unit configured to compute an outline of an intersection plane between a plurality of grid planes defined in a predetermined coordinate system and the peripheral object; and
    an image processing unit configured to draw the outline computed by the outline computation unit on a corresponding peripheral object arranged in the virtual three-dimensional space;
    wherein the plurality of grid planes are configured with planes which are perpendicular to an X-axis in the predetermined coordinate system, planes which are perpendicular to a Y-axis in the predetermined coordinate system, and planes which are perpendicular to a Z-axis in the predetermined coordinate system.

2. The image processing apparatus according to claim 1, further comprising:

   a shape identification unit configured to identify a shape of the peripheral object based on distance to a measurement point on the peripheral object;
   wherein the outline computation unit compute the outline based on the shape identified by the shape identification unit.

3. The image processing apparatus according to claim 2,
   wherein the shape identification unit, when a shape of the peripheral object is identified, excludes a figure which is constituted of the measurement points adjacent one another and in which the inclination of a surface normal from a direction of the range sensor surpasses a predetermined range.

4. The image processing apparatus according to claim 2, further comprising:

   an exclusion unit configured to exclude a measurement point on a road plane among the measurement points;
   wherein the shape identification unit identifies a shape of the peripheral object based on measurement points remaining after measurement points on a road plane are excluded by the exclusion unit.

5. The image processing apparatus according to any one of claims 1 through 4,
   wherein the predetermined coordinate system defining a plurality of grid planes is a car coordinate system defined with the car as a reference or a world coordinate system.

6. The image processing apparatus according to any one of claims 1 through 5,
   wherein the image processing unit carries out drawing by changing an attribute of the outline in accordance with distance from the car.

7. The image processing apparatus according to any one of claims 1 through 6,
   wherein the planes perpendicular to an X-axis are arranged uniformly with a first interspace, the planes perpendicular to a Y-axis are arranged uniformly with a second interspace, and the planes perpendicular to a Z-axis are arranged uniformly with a third interspace.

8. The image processing apparatus according to any one of claims 1 through 7,
   wherein the image processing unit superimposes the outline after drawing the peripheral objects with texture images drawn thereon.

9. The image processing apparatus according to any one of claims 1 through 8, further comprising:

   a display unit configured to display a processing result by the image processing unit on a display screen.

10. An image processing method for an image processing apparatus that, based on an image imaged by a camera installed on a car and distance to a measurement point on a peripheral object computed by a range sensor installed on the car, draws virtual three-dimensional space in which a surrounding environment around the car is reconstructed, the image processing method comprising:

    computing an outline of an intersection plane between a plurality of grid planes and the peripheral object, the plurality of grid planes being defined in a car coordinate system which is a coordinate system defined with the car as a reference and configured with planes which are perpendicular to an X-axis in the car coordinate system, planes which are perpendicular to a Y-axis in the car coordinate system, and planes which are perpendicular to a Z-axis in the car coordinate system; and
    drawing the computed outline on a corresponding peripheral object arranged in the virtual three-dimensional space.

11. A non-transitory storage medium storing a program for an image processing apparatus that, based on an image imaged by a camera installed on a car and distance to a measurement point on a peripheral object computed by a range sensor installed on the car, draws virtual three-dimensional space in which a surrounding environment around the car is reconstructed, the program causing a computer to execute a process comprising:

computing an outline of an intersection plane between a plurality of grid planes and the peripheral object, the plurality of grid planes being defined in a car coordinate system which is a coordinate system defined with the car as a reference and configured with planes which are perpendicular to an X-axis in the car coordinate system, planes which are perpendicular to a Y-axis in the car coordinate system, and planes which are perpendicular to a Z-axis in the car coordinate system; and

drawing the computed outline on a corresponding peripheral object arranged in the virtual three-dimensional space.

12. A program for an image processing apparatus that, based on an image imaged by a camera installed on a car and distance to a measurement point on a peripheral object computed by a range sensor installed on the car, draws virtual three-dimensional space in which a surrounding environment around the car is reconstructed, the program causing a computer to execute a process comprising:

computing an outline of an intersection plane between a plurality of grid planes and the peripheral object, the plurality of grid planes being defined in a car coordinate system which is a coordinate system defined with the car as a reference and configured with planes which are perpendicular to an X-axis in the car coordinate system, planes which are perpendicular to a Y-axis in the car coordinate system, and planes which are perpendicular to a Z-axis in the car coordinate system; and

drawing the computed outline on a corresponding peripheral object arranged in the virtual three-dimensional space.

# FIG. 1

# FIG. 2A

# FIG. 2B

# FIG. 3

# FIG. 4

FIG. 5A

$Z_{CAR}$

$Y_{CAR}$

O ──3

FIG. 5D

$Z_{CAR}$

$Y_{CAR}$

3

RotZ (Pan)

FIG. 5B

$Z_{CAR}$

$Y_{CAR}$

3

RotZ (Rotate)

FIG. 5E

$Z_{CAR}$

$Y_{CAM}$

3

$Z_{CAM}$

$Y_{CAR}$

Translate (Tx, Ty, Tz)

FIG. 5C

$Z_{CAR}$

$Y_{CAR}$

O

RotX ($\pi/2$-Tilt)

3

EP 2 863 365 A2

FIG. 6

# FIG. 7

EP 2 863 365 A2

# FIG. 8A

$Y_{CAM}$

$Z_{CAM}$

3

$C_C$

$I_C$

O
(OPTICAL ORIGIN)

$X_{CAM}$

$$Q = T_C(I_C)$$

# FIG. 8B

$Y_Q$

$Q = (qx, qy)$

IMAGE COORDINATE
SYSTEM

$X_Q$

# FIG. 9

FIG. 10

# FIG. 11

# FIG. 12

FIG. 13

EP 2 863 365 A2

# FIG. 14

EP 2 863 365 A2

$Y = N_Y \times STEP_Y$

$Z_{CAR}$

$Z = N_Z \times STEP_Z$

$Z = 3 \times STEP_Z$

$Z = 2 \times STEP_Z$

$Z = STEP_Z$

$Y_{CAR}$

$STEP_Z$

$STEP_Y$

# FIG. 15

$Z = N_{AZ} \times STEP_Z$

$Z = N_{BZ} \times STEP_Z$

# FIG. 16

## FIG. 17

**IN-CAR APPARATUS** —2

**CONTROL UNIT** —40

| | |
|---|---|
| DECISION UNIT —41 | EXTRACTION UNIT —45 |
| COORDINATE TRANSFORMATION MATRIX GENERATION UNIT —42 | POLYGON JUDGMENT UNIT —46 |
| TEXTURE COORDINATE COMPUTATION UNIT —43 | LINE OF INTERSECTION COMPUTATION UNIT —47 |
| MEASUREMENT POINT COORDINATE COMPUTATION UNIT —44 | IMAGE PROCESSING UNIT —48 |

DISPLAY UNIT —20

OPERATION UNIT —30

STORAGE UNIT —10

IMAGE BUFFER —11

EP 2 863 365 A2

# FIG. 18

```
        ( IMAGE PROCESSING )                                    ( A )
                    │                                            │
                    ▼                    ┌S001                   ▼                    ┌S011
        ┌───────────────────────────┐          ┌───────────────────────────┐
        │   COMPUTE COORDINATE      │          │  DRAW PROJECTION PLANE    │
        │ TRANSFORMATION MATRIX     │          │ POLYGONS WITH TEXTURE     │
        │      M_CAR→CAM            │          │        IMAGE              │
        └───────────────────────────┘          └───────────────────────────┘
                    │                    ┌S002                   │                    ┌S012
                    ▼                                            ▼
        ┌───────────────────────────┐          ┌───────────────────────────┐
        │ COMPUTE TEXTURE COORDINATE│          │ DRAW POLYGONS P REGISTERED │
        │ OF EACH APEX OF PROJECTION│          │ IN POLYGON DATA PD WITH    │
        │     PLANE POLYGON         │          │     TEXTURE IMAGE          │
        └───────────────────────────┘          └───────────────────────────┘
                    │                    ┌S003                   │                    ┌S013
                    ▼                                            ▼
        ┌───────────────────────────┐          ┌───────────────────────────┐
        │   COMPUTE COORDINATE      │          │ SUPERIMPOSE LINES OF       │
        │ TRANSFORMATION MATRIX     │          │ INTERSECTION REGISTERED    │
        │      M_CAR→SNSR           │          │    IN GRID DATA GD         │
        └───────────────────────────┘          └───────────────────────────┘
                    │                    ┌S004                   │                    ┌S014
                    ▼                                            ▼
        ┌───────────────────────────┐          ┌───────────────────────────┐
        │   RECEIVE DISTANCE D(m, n)│          │ DISPLAY ON DISPLAY SCREEN  │
        │   TO MEASUREMENT POINT    │          └───────────────────────────┘
        └───────────────────────────┘                           │          ┌S015
                    │                    ┌S005       NO     ◇─────────◇
                    ▼                                         ◇  END?  ◇
        ┌───────────────────────────┐                    ◇─────────◇
        │ COMPUTE THREE-DIMENSIONAL │                           │ YES
        │ COORDINATE P_SNSR(m, n) OF│                           ▼
        │ MEASUREMENT POINT IN RANGE│                     (   END   )
        │ SENSOR COORDINATE SYSTEM  │
        └───────────────────────────┘
                    │                    ┌S006
                    ▼
        ┌───────────────────────────┐
        │ TRANSFORM RANGE SENSOR    │
        │ COORDINATE SYSTEM         │
        │ P_SNSR(m, n) TO CAR       │
        │ COORDINATE SYSTEM         │
        │ P_CAR(m, n)               │
        └───────────────────────────┘
                    │                    ┌S007
                    ▼
        ┌───────────────────────────┐
        │ EXTRACT MEASUREMENT POINTS │
        │ BELONGING TO STEREOSCOPIC │
        │ POINT GROUP DATA PG2      │
        └───────────────────────────┘
                    │                    ┌S008
                    ▼
        ┌───────────────────────────┐
        │ REGISTER FIGURE SATISFYING│
        │ CONDITION AMONG FIGURES   │
        │ CONSTITUTED OF ADJACENT   │
        │ MEASUREMENT POINTS TO     │
        │ POLYGON DATA PD AS POLYGON│
        │ P                         │
        └───────────────────────────┘
                    │                    ┌S009
                    ▼
        ┌───────────────────────────┐
        │ COMPUTE TEXTURE COORDINATE│
        │ OF EACH APEX OF POLYGON P │
        │ REGISTERED IN POLYGON DATA│
        │ PD                        │
        └───────────────────────────┘
                    │                    ┌S010
                    ▼
        ┌───────────────────────────┐
        │ COMPUTE LINES OF          │
        │ INTERSECTION WITH {X-AXIS,│
        │ Y-AXIS, Z-AXIS} GRID      │
        │ PLANES FOR ALL POLYGONS P │
        │ REGISTERED IN POLYGON DATA│
        │ PD                        │
        └───────────────────────────┘
                    │
                    ▼
                  ( A )
```

# FIG. 19

1

| GPS | 5 |

| ELECTRONIC COMPASS | 6 |

| RANGE SENSOR F | 4F |          | CAMERA F | 3F |

| RANGE SENSOR B | 4B |          | CAMERA B | 3B |

| RANGE SENSOR L | 4L |          | CAMERA L | 3L |

| RANGE SENSOR R | 4R |          | CAMERA R | 3R |

2

## IN-CAR APPARATUS

### CONTROL UNIT 40

| 41 DECISION UNIT | 45 EXTRACTION UNIT |

20 DISPLAY UNIT

| 42 COORDINATE TRANSFORMATION MATRIX GENERATION UNIT | 46 POLYGON JUDGMENT UNIT |

30 OPERATION UNIT

| 43 TEXTURE COORDINATE COMPUTATION UNIT | 47 LINE OF INTERSECTION COMPUTATION UNIT |

| 44 MEASUREMENT POINT COORDINATE COMPUTATION UNIT | 48 IMAGE PROCESSING UNIT |

| | 49 POSITION ESTIMATION UNIT |

10 STORAGE UNIT

11 IMAGE BUFFER

# FIG. 20

S009

↓ S101

| ESTIMATE CAR POSITION IN WORLD COORDINATE SYSTEM |
|---|

↓ S102

| COMPUTE COORDINATE TRANSFORMATION MATRIX $M_{CAR \to WORLD}$ |
|---|

↓

S010

# FIG. 21

1

RANGE SENSOR F — 4F

RANGE SENSOR B — 4B

RANGE SENSOR L — 4L

RANGE SENSOR R — 4R

CAMERA F — 3F

CAMERA B — 3B

CAMERA L — 3L

CAMERA R — 3R

2

IN-CAR APPARATUS

40

CONTROL UNIT

41

DECISION UNIT

45

EXTRACTION UNIT

20

DISPLAY UNIT

42

COORDINATE TRANSFORMATION MATRIX GENERATION UNIT

46

POLYGON JUDGMENT UNIT

10

STORAGE UNIT

11

IMAGE BUFFER

30

OPERATION UNIT

43

TEXTURE COORDINATE COMPUTATION UNIT

47

LINE OF INTERSECTION COMPUTATION UNIT

44

MEASUREMENT POINT COORDINATE COMPUTATION UNIT

48

IMAGE PROCESSING UNIT

4A

DISTANCE COMPUTATION UNIT

# FIG. 22

S010

↓

S201

COMPUTE DISTANCE TO EACH
INTERSECTION POINT OF
LINES OF INTERSECTION
REGISTERED IN GRID DATA GD

↓

S011

# FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012017560 A